# EUROPÄISCHE PATENTSCHRIFT

(11) **EP 2 860 010 B1**
(45) Veröffentlichungstag und Bekanntmachung des Hinweises auf die Patenterteilung: **25.10.2017**
(21) Anmeldenummer: 14002850.7
(22) Anmeldetag: 15.08.2014
(51) Int. Cl.: B29C 45/16

(54) **Vorrichtung und Verfahren zur Herstellung eines mehrschichtigen hohlen Formteils aus faserverstärktem Kunststoff**
Device and method for producing a multi-layered hollow article from fibre-reinforced plastic
Dispositif et procédé de fabrication d'un élément de formage creux multicouche en plastique renforcé en fibres

(30) Priorität: 30.09.2013 DE 102013016161; 31.12.2013 DE 102013022244
(43) Veröffentlichungstag der Anmeldung: 15.04.2015
(73) Patentinhaber: WILO SE, 44263 Dortmund (DE)
(72) Erfinder: Küster, Bernd, 44379 Dortmund (DE)
(74) Vertreter: Cohausz Hannig Borkowski Wißgott

(56) Entgegenhaltungen:
- WO-A1-2008/079367
- CA-A1- 2 683 614
- Menges Michaeli Mohren: "How to make injection moulds", , 31. Dezember 1999 (1999-12-31), XP055173057, Gefunden im Internet: URL:Book [gefunden am 2015-03-02]
- JOHANNABER F ET AL: "Handbuch Spritzgiessen, 2K-VERBUNDSPRITZGIESSEN/ZWEIFARBENSPRITZGI ESSEN (2F-SG), OVERMOULDING", HANDBUCH SPRITZGIESSEN, XX, XX, 1. Januar 2001 (2001-01-01), Seiten 506-509,1024, XP002253157,
- CARL HANSER VERLAG ET AL: "Kein Drehwürfel, sondern ein Quader mit Umlaufbahnglass+,fiber+,fibre+", KUSTSTOFFE, 28. Februar 2013 (2013-02-28), XP055172954,
- "MULTIFUNCTIONAL MOLDING", JAPAN PLASTICS AGE, PLASTICS AGE CO LTD. TOKYO, JP, Bd. 25, Nr. 215, 1. Mai 1987 (1987-05-01), Seiten 21-23, XP002084459,

## Beschreibung

Die Erfindung betrifft eine Vorrichtung zum Spritzgießen eines mehrschichtigen hohlen Formteils aus faserverstärktem Kunststoff, mit einer ersten Spritzgusseinheit, die eine erste äußere Werkzeughälfte und einen ersten Formkern aufweist, welche relativ und koaxial zueinander beweglich sind und in ihrem geschlossenen Zustand zwischen ihnen ein erster schirmförmiger Angusskanal und eine erste, sich daran anschließende Formkavität zur Herstellung eines Vorspritzlings gebildet ist. Des Weiteren betrifft die Erfindung ein Verfahren zur Herstellung eines mehrschichtigen hohlen Formteils aus faserverstärktem Kunststoff, bei dem ein Kunststoffmaterial über einen ersten schirmförmigen Angusskanal unter Ausbildung eines ersten Schirmangusses in eine erste Formkavität eingespritzt wird, insbesondere unter Verwendung der genannten Vorrichtung.

Es ist allgemein bekannt, rotationssymmetrische, insbesondere rohrförmige Kunststoffformteile unter Verwendung eines Schirmangusses spritzzugießen. Damit wird ein gleichmäßiges Füllen des gesamten Querschnitts der Formkavität erreicht, ohne dass bei dem spritzgegossenen Formteil festigkeitsmindernde Bindenähte entstehen. Eine Übersicht verschiedener Angussgeometrien ist beispielsweise aus dem Buch "How to Make Injection Molds", Menges/ Michaelo/ Mohren, Carl Hanser Verlag, 2000, Kapitel 6, Seiten 208 ff. bekannt.

Ein Schirmanguss nach dem Stand der Technik entsteht durch einen zentral gespeisten, trichterförmigen Angusskanal. Dieser verbindet einen zentralen, koaxial zu dem herzustellenden Spritzling liegenden Einspritzpunkt mit der Formkavität. Unmittelbar vor dem Schirmanguss, d.h. am düsenseitigen Ende des die flüssige Kunststoffformmasse in den Angusskanal zuführenden Kanals, liegt ein Raumbereich, der so genannte Angusskegel, in den die Einspritzdüse das Kunststoffmaterial einspritzt. Der Angusskegel geht in den Schirmanguss über, wobei an dem Übergangsbereich die Schirmangussgeometrie einen Kegelwinkel von mehr als 135° aufweist, so dass die Kunststoffformmasse am Ende des kegelförmigen Zuführungskanals in eine anteilig radiale Richtung umgelenkt wird. Sie strömt dann schirmförmig in einem konstanten Winkel zur Formteilachse zur Formkavität. Am formkavitätsnahen Ende des Angusskanals nach dem Stand der Technik erfolgt eine erneute Umlenkung der eingespritzten Kunststoffformmasse um fast 90° derart, dass sie in axialer Richtung in die Formkavität eintritt. Bei anderen Ausführungsvarianten geht der schirmförmige Angusskanal in einem stumpfen Winkel in die Formkavität über.

Nach der Herstellung des spritzgegossenen Formteils ist der Schirmanguss samt Angusskegel zu entfernen. Hierbei entsteht Abfallmaterial und es ist ferner eine Nachbearbeitung des Formteils erforderlich. Dennoch eignen sich Schirmangüsse zur Herstellung qualitativ hochwertiger Formteile mit hoher Maßhaltigkeit.

In der Praxis ist die Herstellung mehrschichtiger Kunststoffformteile von hohem Interesse. Derartige Formteile bestehen aus zwei oder mehr Schichten von Kunststoff, die einzeln erzeugt werden. Dabei wird zunächst ein Vorspritzling hergestellt und auf diesen dann eine weitere Schicht oder weitere Schichten im Spritzguss angeformt oder aufgetragen. Ein solches Verfahren beschreibt z. B. die internationale Veröffentlichung WO 2008/079367 A1 und die Veröffentlichung CA2683614 Da eine jeweilige Kunststoffschicht bezogen auf die Materialdicke des fertigen Formteils vergleichsweise dünn ist, wirken sich die Schwindungseffekte der jeweiligen Kunststoffschicht am Gesamtformteil geringer aus, so dass durch ein Mehrschicht-Spritzgussverfahren maßhaltige Formteile hergestellt werden können.

Eine weitere Motivation für den Einsatz dieser Technik besteht in der Möglichkeit, die einzelnen Schichten aus unterschiedlichen Kunststoffmaterialen auszubilden, die dann exakt an den spezifischen Einsatzbereich angepasst werden können. Eine derartige Technik ist als Zwei-Komponenten (2K) Spritzguss bekannt. So kann beispielsweise ein elastomerer Kunststoff eine der Schichten bilden oder an einem Teil des Vorspritzlings angespritzt sein, so dass Stöße oder Vibrationen von dieser Schicht/ diesem Teil aufgenommen oder gedämpft werden können. Weiterhin kann ein besonders hartes, verschleißarmes Kunststoffmaterial dort verwendet werden, wo das Formteil mit einer bewegten anderen Komponente in Berührung steht oder gegenüber einer stationären Komponente selbst in Bewegung ist.

Eine Beschreibung des 2K-Verbundspritzgießens/ Overmolding ist ferner auch in "Handbuch Spritzgießen", Johannaber F. et al, 1.1.2001, Seiten 506 - 509, 1024-1026 gegeben. Der Werbetext "Kein Drehwürfel, sondern ein Quader mit Umlaufbahn" in Kunststoffe 2/2013, Carl Hanser Verlag München, F, Vandemaele, 28.2.2013, beschreibt eine Vorrichtung für das Mehrkomponenten-Spritzgießen, bei dem die Kavitäten den zentralen Werkzeugblock auf einem Transportsystem durchlaufen.

Eine andere Werkzeugmaschine für das Herstellen mehrschichtiger Formteile beschreibt die Veröffentlichung "Multifunctional Molding", Japan Plastics Age, Plastics Age Co Ltd., Tokyo, Japan, Bd. 25, Nr. 215, 1. Mai 1987, Seiten 21-13. Hier wird ein drehbares, die Kavität definierendes Werkzeugteil verwendet, um einen Vorspritzling von einer ersten Spritzdüse um 180° zu einer diametral zur Drehachse liegenden zweiten Spritzdüse zu bewegen, die den Vorspritzling mit einer zweiten Schicht umspritzt. Beide Spritzdüsen können gleichzeitig in Betrieb sein. Um die Drehung zu ermöglichen, fahren äußere Werkzeughälften, die die beiden Spritzdüsen umfassen, von dem drehbaren Werkzeugteil radial nach außen und weg und nach der Drehung wieder zu.

Es ist Aufgabe der vorliegenden Erfindung, eine Vorrichtung und ein Verfahren bereit zu stellen, das das bekannte Spritzgussverfahren zur Herstellung hohler Formteile mit Schirmanguss weiterbildet und mit hoher Maßhaltigkeit ermöglicht, wobei eine gezielte Ausrichtung der Verstärkungsfasern im herzustellenden Formteil erreicht werden soll.

Diese Aufgabe wird durch eine Vorrichtung mit den Merkmalen des Anspruchs 1 sowie durch ein Verfahren mit den Merkmalen des Anspruchs 17 gelöst. Vorteilhafte Weiterbildungen sind in den abhängigen Ansprüchen angegeben.

Erfindungsgemäß wird eine Vorrichtung zum Spritzgießen eines mehrschichtigen hohlen Formteils aus faserverstärktem Kunststoff, mit einer ersten Spritzgusseinheit vorgeschlagen, die eine erste äußere Werkzeughälfte und einen ersten Formkern aufweist, welche relativ und koaxial zueinander beweglich sind und in ihrem geschlossenen Zustand zwischen ihnen ein erster schirmförmiger Angusskanal und eine erste, sich daran anschließende Formkavität zur Herstellung eines Vorspritzlings gebildet ist, wobei die Vorrichtung eine zweite Spritzgusseinheit mit einer zweiten äußeren Werkzeughälfte aufweist, zu der der erste Formkern mitsamt eines darauf befindlichen Vorspritzlings verbringbar ist, wobei der erste Formkern und die zweite äußere Werkzeughälfte relativ und koaxial zueinander beweglich sind und zwischen ihnen im geschlossenen Zustand ein zweiter schirmförmiger Angusskanal und eine zweite, sich daran anschließende Formkavität zur Herstellung eines Rohformteils oder eines Zwischenspritzlings gebildet ist, wobei der zweite Angusskanal und die zweite Formkavität innenseitig durch den Vorspritzling begrenzt sind.

Des Weiteren wird erfindungsgemäß ein Verfahren zur Herstellung eines mehrschichtigen hohlen Formteils aus faserverstärktem Kunststoff vorgeschlagen, bei dem in einem ersten Schritt ein Kunststoffmaterial über einen ersten schirmförmigen Angusskanal unter Ausbildung eines ersten Schirmangusses in eine erste Formkavität eingespritzt wird und in einem zweiten Schritt ein Kunststoffmaterial über einen zweiten schirmförmigen Angusskanal unter Ausbildung eines zweiten Schirmangusses in eine zweite Formkavität eingespritzt wird, wobei der zweite Angusskanal durch den ersten Schirmanguss begrenzt wird und die zweite Formkavität durch das die erste Formkavität ausfüllende Kunststoffmaterial begrenzt wird und die Schirmangüsse anschließend zum Erhalt des Formteils abgetrennt werden.

Die Erfindung realisiert eine Art Schirm-auf-Schirm Spritzgießverfahren. Damit wird eine enge formschlüssige Verbindung zwischen den Materialkomponenten in einem einzigen Fertigungsverfahren erreicht, so dass es bei dem hergestellten Formteil keiner zusätzlichen Montageschritte bedarf und die Werkstoffpotentiale aller Materialkomponenten optimal ausgenutzt werden können. Mit dem erfindungsgemäßen Verfahren können besonders maßhaltige mehrschichtige hohle, insbesondere rotationssymmetrische Kunststoffformteile hergestellt werden.

Die beiden Formkavitäten sind jeweils durch zylindrische Ringräume gebildet. Dabei wird die zweite Kunststoffschicht um die erste Kunststoffschicht herum gespritzt, wobei das Einspritzen jeweils in axialer Richtung zum herzustellenden Formteil von einem Ende aus, d.h. parallel zur Formteilachse erfolgt. Im ersten Schritt wird ein Vorspritzling samt Schirmanguss hergestellt, der im zweiten Schritt die innenseitige Begrenzung der Kavität für die zweite Schicht bildet. Dadurch erhält der zweite Angusskanal dieselbe Geometrie wie der erste Angusskanal bzw. der erste Schirmanguss. Im zweiten Schritt wird folglich das Kunststoffmaterial auf den Vorspritzling aufgespritzt, so dass die zweite Kunststoffschicht eine teils stoffschlüssige, teils kraftschlüssige Verbindung mit der ersten Kunststoffschicht eingeht.

Der Vorteil der Erfindung liegt darin, dass nicht nur die erste Formkavität in axialer Richtung gefüllt wird, sondern auch die zweite Formkavität. Die Fließrichtung des Kunststoffmaterials im zweiten Schritt gegenüber der Fließrichtung im ersten Schritt ist somit stets parallel, bzw. verlaufen die Fließrichtungen entlang paralleler Kurven. Dies ist sowohl innerhalb des ersten und zweiten Angusskanals als auch innerhalb der ersten und zweiten Formkavität der Fall.

Nicht nur bei der Herstellung des Vorspritzlings sondern auch bei der Ausbildung der äußeren oder einer der äußeren Schichten wird dadurch eine homogene Fließfront erreicht, wodurch Bindenähte in der zweiten oder weiteren Schicht vermieden werden. Dadurch, dass das Kunststoffmaterial die Kavität über den gesamten Umfang gleichmäßig füllt, d.h. sich über den gesamten Umfang eine geschlossenen Fließfront mit gleichen Eigenschaften, insbesondere gleicher Fließgeschwindigkeit, gleichem Druck, gleicher Temperatur etc. bildet, erhält auch die zweite bzw. weitere Schicht sehr homogene Materialeigenschaften. Es wird dadurch vermieden, dass sich das Rohformteil krumm und schief verzieht. Trotz des Materialverbunds mit dem Vorspritzling ergibt sich dadurch, dass sich keine mechanischen Spannungen aufbauen, die zu Rissen im Formteil führen könnten. Das Formteil kann folglich präzise und maßgetreu gefertigt werden.

Beim Einspritzen des Kunststoffmaterials im zweiten Schritt werden zusätzliche Druckverluste vermieden, und in den Kunststoffmaterialien gegebenenfalls vorhandene Verstärkungsfasern und/ oder andere Füllstoffe verteilen sich identisch und richten sich identisch in den beiden Schichten aus.

Erfindungsgemäß sind das erste und das zweite Kunststoffmaterial faserverstärkt, und können beispielsweise Kohienstofffasern, Metallfasern, Glasfasern und/ oder Aramidfasern enthalten, um eine höhere mechanische Festigkeit zur Aufnahme radialer und gegebenenfalls auch axialer Kräfte zu erhalten.

Das erfindungsgemäße Verfahren kann vorzugsweise dahingehend weitergebildet werden, dass in einem dritten Schritt ein Kunststoffmaterial über einen dritten schirmförmigen Angusskanal unter Ausbildung eines dritten Schirmangusses in eine dritte Formkavität eingespritzt wird, wobei der dritte Angusskanal durch den zweiten Schirmanguss begrenzt wird und die dritte Formkavität durch das die zweite Formkavität ausfüllende Kunststoffmaterial begrenzt wird, und wobei die Schirmangüsse anschließend zum Erhalt des Formteils abgetrennt werden.

In entsprechender Weise kann die erfindungsgemäße Vorrichtung eine dritte Spritzgusseinheit mit einer dritten äußeren Werkzeughälfte aufweisen, zu der der erste Formkern mitsamt eines darauf befindlichen Zwischenspritzlings verbringbar ist, wobei der erste Formkern und die dritte äußere Werkzeughälfte relativ und koaxial zueinander beweglich sind und zwischen ihnen im geschlossenen Zustand ein dritter schirmförmiger Angusskanal und eine dritte, sich daran anschließende Formkavität zur Herstellung eines Rohformteils gebildet ist, wobei der dritte Angusskanal und die dritte Formkavität innenseitig durch den Zwischenspritzling begrenzt sind.

Bei dieser Weiterbildung wird die dritte Kunststoffschicht um die zweite Kunststoffschicht herum gespritzt, so dass diese mit der zweiten Kunststoffschicht eine teils stoffschlüssige, teils kraftschlüssige Verbindung eingeht. Das Einspritzen erfolgt auch im dritten Schritt in axialer Richtung zum herzustellenden Formteil, d.h. parallel zur Formteilachse, so dass sich die dritte Formkavität in axialer Richtung füllt. Während im ersten Schritt ein Vorspritzling samt Schirmanguss hergestellt wird, wird im zweiten Schritt ein Zwischenspritzling hergestellt, der im dritten Schritt die innenseitige Begrenzung der Kavität für die dritte Schicht bildet. Aufgrund der Geometrie des zweiten Angusskanals bzw. genauer gesagt des in ihm hergestellten zweiten Schirmangusses des Zwischenspritzlings, erhält auch der dritte Angusskanal eine Geometrie wie der zweite Schirmanguss. Die Strömungsrichtung des Kunststoffs im dritten Schritt ist ebenfalls parallel zu den Strömungsrichtungen im ersten und zweiten Schritt.

Wie bereits genannt, können in den einzelnen Verfahrensschritten identische Kunststoffmaterialen oder zumindest identische Kunststoffgrundmaterialen verwendet werden. Bei der Verwendung von zwei verschiedenen Kunststoffmaterialen, die dasselbe Kunststoffgrundmaterial besitzen, kann sich eine besonders starke und gute stoffliche Verbindung zwischen dem Vorspritzling und der äußeren Kunststoffschicht ausbilden. Im Falle gleicher Kunststoffgrundmaterialen können diese durch unterschiedliche Füllstoffe optimiert sein. Alternativ ist es möglich, dass die Kunststoffgrundmaterialen durch identische Stoffe optimiert sind, jedoch der prozentuale Anteil der Stoffe in den einzelnen Kunststoffgrundmaterialen unterschiedlich ist. Weiter alternativ können in den Schritten auch gänzlich unterschiedliche Kunststoffmaterialien verwendet werden, insbesondere Duroplaste, Thermoplaste, Elastomere oder Materialpaarungen derselben.

Beispielsweise kann zumindest das im ersten Schritt eingespritzte Kunststoffmaterial ein tribologisch wirksames Material sein. Ein tribologisch wirksames Material zeichnet sich insbesondere durch eine hohe Abriebfestigkeit, d.h. einen geringen Verschleiß, bei gleichzeitig guten Schmiereigenschaften aus. Eine erste Kunststoffschicht aus einem solchen Material ist besonders dann von Vorteil, wenn die Innenseite des herzustellenden Formteils an einem anderen Bauteil anliegt und eine Relativbewegung zwischen dem Formteil und diesem Bauteil ausgeführt wird. Eine solche Konstellation ergibt sich beispielsweise dann, wenn das Formteil ein Lager auf einer sich drehenden Welle bildet.

Als Kunststoffmaterial für den ersten Schritt kann PEEK (Polyetheretherketon), PEK (Polyetherketon), PEI (Polyetherimid), PAI (Polyamidimid), PPE (Polyphenylenether), PPA (Polyphthalamid) oder eine Kombination daraus verwendet werden. Auch für das zweite Kunststoffmaterial können die genannten Kunststoffe verwendet werden. Dies bedeutet, dass das gesamte Rohformteil aus einem dieser Materialien bestehen kann. Es ist jedoch bei bestimmten Formteilen von Vorteil, beispielsweise wenn das Formteil ein Gleitlager für einen Welle bilden soll, nur die innere Schicht des Formteils aus einem hochwertigen, insbesondere tribologisch optimierten Kunststoff zu spritzen, wohingegen das im zweiten Schritt eingespritzte Kunststoffmaterial aus einem konventionellen Kunststoff bestehen kann. Hier kommen beispielsweise PP (Polypropylen), PPS (Polyphenylensulfid) oder PE (Polyelthylen) in Frage, die idealerweise auch faserverstärkt sind, um die Festigkeit des Formteils zu erhöhen. Diese Kunststoffe sind im Vergleich zu den zuvor genannten Kunststoffen preiswertere thermoplastische Kunststoffe.

Bevorzugt kann als tribologisch wirksames Kunststoffmaterial PEEK verwendet werden, das mit einem Anteil Kohlefasern und/ oder mit einem Anteil Graphit und/ oder mit den Nanofüllstoffen Titandioxid und/ oder Zinksulfid versetzt ist. PEEK besitzt bereits gute tribologische Eigenschaften, eine sehr gute Temperaturstabilität, eine hohe chemische Beständigkeit und ist zudem umweltverträglich. Kohlefasern ergänzen und verbessern diese Eigenschaften: so werden der Reibungskoeffizient reduziert, die Verschleißbeständigkeit erhöht, die mechanische Stabilität gestärkt und die thermische und elektrische Leitfähigkeit verbessert. Auch Graphit als Zusatzstoff in einer PEEK Matrix trägt zu einer Verbesserung und Ergänzung der Eigenschaften von PEEK bei: so werden auch hierdurch der Reibungskoeffizient reduziert, die Verschleißrate bei Trockenlauf reduziert, die elektrische Leitfähigkeit verbessert und dem PEEK antistatische

Gemäß einer weiteren Alternativ kann das im zweiten und/ oder dritten Schritt eingespritzte Kunststoffmaterial ein Elastomer sein. Dieses hat den Vorteil, dass Stöße aufgefangen und Vibrationen aufgenommen werden können. Vorzugsweise kann das Elastomer als Zwischenschicht zwischen einer gegenüber dem Elastomer härten inneren und äußeren Kunststoffschicht ausgebildet sein.

Erfindungsgemäß umfasst die erste Spritzgusseinheit die erste äußere Werkzeughälfte sowie den ersten Formkern, welche relativ und koaxial zueinander beweglich sind. Dies bedeutet, dass entweder der erste Formkern in die äußere Werkzeughälfte, die äußere Werkzeughälfte auf den Formkern oder beide Werkzeugteile gemeinsam ineinander gefahren werden bzw. werden können. Der erste Formkern wird vorzugsweise von einer inneren Werkzeughälfte getragen, mit der er fest verbunden ist. Insbesondere kann diese erste innere Werkzeughälfte eine lineare Verfahrbewegung relativ zur ersten äußeren Werkzeughälfte ausführen. In der ersten äußeren Werkzeughälfte ist eine die äußere Kontur der ersten Kunststoffschicht des Formteils definierende Ausnehmung vorhanden, in die der erste Formkern koaxial angeordnet werden kann. Die erste Formkavität besteht sodann zwischen dem ersten Formkern und der die Ausnehmung definierenden Innenwand der ersten Werkzeughälfte.

Die erste Spritzgusseinheit umfasst ferner eine erste Einspritzdüse zum Einspritzen des Kunststoffmaterials in den ersten Angusskanal respektive die erste Formkavität. Diese erste Einspritzdüse mündet in diese Ausnehmung, wobei sie geeigneterweise in einen zentralen Punkt des schirmförmigen Angusskanals, insbesondere in seinen Sattelpunkt mündet.

Nach dem Zusammenfahren der Werkzeughälften wird in die erste Formkavität ein Kunststoffmaterial eingespritzt, das nach dem Aushärten oder Abkühlen den Vorspritzling bildet. Anschließend werden die erste äußere Werkzeughälfte und der erste Formkern relativ zueinander auseinander gefahren. Auch dies kann dadurch geschehen, dass entweder die innere Werkzeughälfte aus der äußeren Werkzeughälfte herausgefahren, die äußere Werkzeughälfte von der inneren Werkzeughälfte weggefahren oder beide Werkzeughälften gemeinsam auseinander gefahren werden.

Anschließend wird der erste Formkern mitsamt dem Vorspritzling zu der zweiten Spritzgusseinheit der erfindungsgemäßen Vorrichtung verbracht. Deren zweite äußere Werkzeughälfte weist eine die äußere Kontur der zweiten Kunststoffschicht des herzustellenden Formteils definierende Ausnehmung auf. Die Ausnehmung in der zweiten äußeren Werkzeughälfte ist größer als die Ausnehmung in der ersten äußeren Werkzeughälfte, da in ihr der erste Formkern samt Vorspritzling Platz finden muss und zwischen dem Vorspritzling und der die Ausnehmung definierenden Innenwand der zweiten äußeren Werkzeughälfte die zweite Formkavität ausgebildet werden muss.

Die zweite Spritzgusseinheit, insbesondere die zweite äußere Werkhälfte, kann einstückig mit der ersten äußeren Werkzeughälfte ausgebildet sein oder ein separates Teil der Spritzgussmaschine, d.h. der erfindungsgemäßen Vorrichtung sein. Letzteres hat den Vorteil, dass sie zu Wartungs- oder Reparaturzwecken unabhängig von der ersten Spritzgusseinheit, respektive der ersten äußeren Werkzeughälfte demontiert und ausgetauscht werden kann.

Zur Ausbildung der zweiten Kavität werden der erste Formkern und die zweite äußere Werkzeughälfte relativ zueinander zusammengefahren. Danach wird in die zweite Formkavität zur Herstellung eines Zwischenspritzlings oder Rohformteils Kunststoffmaterial eingespritzt. Schließlich werden die zweite äußere Werkzeughälfte und der erste Formkern relativ zueinander auseinandergefahren. Als Zwischenspritzling wird in diesem Zusammenhang ein hergestelltes Formteil bezeichnet, das in einem anschließenden Spritzgießschritt weiter geformt wird, d.h. noch nicht seine endgültige Ausgestaltung erreicht hat. Demgegenüber bezeichnet das Rohformteil das herzustellende Formteil mitsamt Schirmanguss bzw. Schirmangüssen, die nach dem Spritzgießprozess mechanisch abgetrennt werden, um das fertige Formteil in seiner Endform zu erhalten.

Die zweite Spritzgusseinheit umfasst ebenfalls eine Einspritzdüse zum Einspritzen des Kunststoffmaterials in den zweiten Angusskanal respektive die zweite Formkavität. Diese zweite Einspritzdüse mündet in die Ausnehmung der zweiten äußeren Werkzeughälfte, wobei sie geeigneterweise in einen zentralen Punkt des schirmförmigen zweiten Angusskanals, insbesondere in seinen Sattelpunkt mündet.

Der erste Formkern kann auf unterschiedliche Weise verbracht, d.h. verfahren werden. Gemäß einer ersten Variante ist der Formkern Teil eines drehbaren Drehtellers, von dem er sich in Richtung der äußeren Werkzeughälfte hin erstreckt. Durch Drehen des Drehtellers um einen bestimmten Winkel kann der Formkern dann von der ersten äußeren Werkzeughälfte zur zweiten äußeren Werkzeughälfte verbracht werden.

Alternativ kann der Formkern Teil eines beweglichen Schlittens sein, von dem er sich in Richtung der äußeren Werkzeughälfte hin erstreckt. Vorzugsweise durch eine Linearbewegung des Schlittens entlang einer bestimmten Strecke kann der Formkern dann von der ersten äußeren Werkzeughälfte zur zweiten äußeren Werkzeughälfte verbracht wird.

Der bestimmte Winkel im Falle eines Drehtellers bzw. die bestimmte Strecke im Falle eines Schlittens richten sich nach dem Abstand der beiden äußeren Werkzeughälften zueinander, bzw. genauer gesagt nach dem Abstand der Achsen der ersten und zweiten Formkavität, sowie beim Drehteller zusätzlich danach, wo die Drehachse des Drehteller bezogen auf die Kavitätsachsen angeordnet ist.

Vorzugsweisen kann der Schlitten einen zweiten Formkern aufweisen, der sich vorteilhafterweise wie der erste Formkern von dem Schlitten in Richtung der äußeren Werkzeughälfte hin erstreckt und folglich gemeinsam mit dem ersten Formkern bewegt wird. Dabei ist der zweite Formkern auf dem Schlitten derart angeordnet, dass er mit der ersten äußeren Werkzeughälfte zusammengefahren wird, wenn der erste Formkern mit der zweiten äußeren Werkzeughälfte zusammengefahren wird. Somit besteht zwischen dem ersten und zweiten Formkern eine synchrone Bewegung.

Im Falle eines Schlittens entspricht der Abstand zwischen den beiden Formkernen gerade dem Abstand der Achsen der ersten und zweiten Formkavität. Wird der Schlitten um diesen Abstand von der ersten äußeren Werkzeughälfte zur zweiten äußeren Werkzeughälfte verschoben, liegt der zweite Formkern dann konzentrisch zur ersten äußeren Werkzeughälfte. Der Schlitten kann auch einen dritten oder mehr Formkerne aufweisen, die entlang einer Reihe angeordnet sind, und vorzugsweise identisch zum zweiten bzw. zueinander beabstandet sind, wie der erste Formkern zum zweiten Formkern. Dies bedeutet, dass ein intermittierendes Linearbewegen des Schlittens mit einer Wegstrecke möglich wird, die dem Abstand der Formkerne entspricht. Dies führt dazu, dass der erste Formkern mitsamt Vorspritzling von der ersten äußeren Werkzeughälfte zur zweiten äußeren Werkzeughälfte verbracht wird, und gleichzeitig der nächste unbespritzte Formkern zur ersten äußeren Werkzeughälfte bewegt wird.

Vorzugsweisen kann auch der Drehteller einen zweiten Formkern aufweisen, der sich vorteilhafterweise wie der erste Formkern von dem Drehteller in Richtung der äußeren Werkzeughälfte hin erstreckt und folglich gemeinsam mit dem ersten Formkern bewegt wird. Dabei ist der zweite Formkern derart angeordnet, dass er mit der ersten äußeren Werkzeughälfte zusammengefahren wird, wenn der erste Formkern mit der zweiten äußeren Werkzeughälfte zusammengefahren wird. Somit besteht zwischen dem ersten und zweiten Formkern eine synchrone Bewegung.

Auf dem Drehteller können auch ein dritter oder sogar weitere Formkerne vorgesehen sein, die geeigneterweise entlang eines konzentrisch zur Drehachse liegenden Kreises angeordnet sind, und vorzugsweise identisch zum zweiten bzw. zueinander beabstandet sind, wie der erste Formkern zum zweiten Formkern. Dies bedeutet, dass die Achsen der n Formkerne ein symmetrisches n-Eck aufspannen, um dessen Mittelpunkt gedreht wird. Eine intermittierende Drehbewegung des Drehtellers mit einem einer Seitenlänge des n-Ecks entsprechenden Drehwinkel führt dann dazu, dass der erste Formkern samt Vorspritzling von der ersten äußeren Werkzeughälfte zur zweiten äußeren Werkzeughälfte verbracht wird, und der nächste unbespritzte Formkern zur ersten äußeren Werkzeughälfte bewegt wird. Die Position der Drehachse bzw. der Mittelpunkt des n-Ecks ist entsprechend so zu wählen, dass die Achsen der Formkerne mit den Achsen der Kavitäten zusammenfallen. Ist der Abstand der Achsen der Kavitäten a und der Radius des Kreises r, so ist der Drehwinkel α = 2arcsind (a/2r).

Der Schlitten oder der Drehteller ist vorzugsweise ein Teil der inneren Werkzeughälfte. Er kann die innere Werkzeughälfte aber auch bilden oder diese tragen. Fahren der Schlitten oder der Drehteller und die beiden äußeren Werkzeughälften zusammen, werden die erste und zweite Kavität gleichzeitig ausgebildet. Es kann dann anschließend gleichzeitig in die erste und zweite Kavität Kunststoffformmasse eingespritzt werden, so dass in der ersten Kavität der Vorspritzling und in der zweiten Kavität der Zwischenspritzling oder das Rohformteil hergestellt wird. Dies bedeutet, dass auf den zweiten Formkern das im ersten Schritt vorgesehene Kunststoffmaterial und auf den den Vorspritzling tragenden ersten Formkern das im zweiten Schritt vorgesehene Kunststoffmaterial aufgespritzt wird.

Es hat sich gezeigt, dass bei der Verwendung faserverstärkter Kunststoffe in konventionellen Schirmangussgeometrien Scherung auftritt, wodurch die Verstärkungsfasern beschädigt werden, insbesondere brechen. Ferner führen die Umlenkungen der Kunststoffmasse in konventionellen Angussgeometrien beim Einspritzen zu einem Verstrecken der Polymermoleküle, wodurch sich die Eigenschaften der Kunststoffformmasse ändern. Im Übrigen führen winklige Umlenkstellen, Stufen, Kanten, Hinterschnitte und sonstige Hindernisse innerhalb des Angusskanals stets zu Turbulenzen innerhalb der strömenden Kunststoffformmasse, wodurch keine definierte Faserorientierung erreicht wird. Dies beeinträchtigt die Stabilität des Formteils. Bei hochqualitativen, faserverstärkten Kunststoffformteilen ist jedoch eine ganz bestimmte Faserausrichtung innerhalb des Formteils wünschenswert, denn die Faserausrichtung beeinflusst einerseits die mechanischen Festigkeitseigenschaften und andererseits die Schwindung des Kunststoffs und damit die Maßhaltigkeit des herzustellenden Formteils. Es ist daher von Vorteil, den Angusskanal besonders strömungsgünstig auszubilden, d.h. weitegehend ohne winklige Umlenkstellen, Stufen, Kanten, Hinterschnitte und sonstige Hindernisse, um eine definierte homogene Ausrichtung der Verstärkungsfasern zu erhalten, wenn die Kunststoffformasse in die Kavität eintritt.

So kann der erste Angusskanal einen sphärischen Bereich aufweisen, der von eingespritztem Kunststoffmaterial zuerst durchströmbar ist. Dies bedeutet, dass das erste Kunststoffmaterial nach dem Einspritzen zunächst durch diesen sphärischen Bereich des ersten Angusskanals strömt und erst danach in die erste Formkavität eintritt. Im Gegensatz zu trichterförmigen Angusskanälen, wie sie im Stand der Technik verwendet werden, schlägt die Erfindung folglich vor, den ersten Angusskanal sphärisch auszubilden, so dass die Angussgeometrie und der letztendlich nach dem Spritzgießvorgang vorhandene Schirmanguss sphärisch in der Art einer Halbkugelschale oder Kalotte ist. Dabei ist es jedoch nicht zwingend erforderlich, dass der sphärische Bereich eine volle Halbkugelschale bildet. Er kann alternativ von einem Halbkugelschalensegment gebildet sein. Durch die sphärische Gestalt wird zwar der Fließweg innerhalb des Angusskanals im Vergleich zu der trichterförmigen Ausführung gemäß Stand der Technik, bei der der Angusskanal im Querschnitt V-förmig ist, vergrößert, jedoch bietet eine sphärische Geometrie des Angusskanals strömungsgünstige Eigenschaften, unter anderem deshalb, weil sie rotationssymmetrisch ist und an der Eintritts- und Austrittsseite keine Winkel besitzt.

Ausgehend von der Einspritzdüse wird das Kunststoffmaterial vorzugsweise zentral in den sphärischen Bereich eingespritzt und dann bogenförmig in dem ersten Angusskanal geführt, um anschließend in die Formkavität einzutreten. Dies bedeutet, dass der erste Angusskanal im Querschnitt zumindest abschnittsweise halbkreisförmig oder halbkreissegmentförmig ist. Das Kunststoffmaterial wird im sphärischen Angusskanal weniger geschert, so dass gegebenenfalls vorhandene Verstärkungsfasern geringer beschädigt werden und kein Verstrecken der Makromoleküle des Kunststoffpolymers stattfindet. Ferner können sich die Verstärkungsfasern in Strömungsrichtung optimal ausrichten, so dass sie beim Eintritt in die jeweilige Formkavität keine ungeordnete Struktur aufweisen. Dies führt im Weiteren zu besseren und reproduzierbaren Formteileigenschaften.

Der sphärische Bereich kann unmittelbar in die erste Formkavität münden, d.h. achsparallel in diese übergehen. In diesem Fall wird der sphärische Bereich durch eine volle Halbkugelschale gebildet. Weitere Umlenkungen der Formmasse, die zu Strömungsturbulenzen führen können, werden dadurch vermieden.

Alternativ kann der erste Angusskanal wenigstens zwei Bereiche unterschiedlicher Geometrie aufweisen. Jede Geometrie bewirkt dabei besondere Vorteile. So kann zwischen dem sphärischen Bereich und der ersten Formkavität insbesondere zusätzlich ein konischer Bereich und/ oder ein oder zwei zylindrische Bereiche vorhanden sein. Dies gilt auch für den zweiten Angusskanal.

Beispielsweise ist es sinnvoll, wenn der erste Angusskanal zwischen seinem sphärischen Bereich und der Formkavität noch einen konischen Bereich aufweist, der sich an den sphärischen Bereich anschließt. Hierdurch kann der Durchmesser des sphärischen Bereichs reduziert werden und/ oder braucht keine volle Halbkugelschale zu bilden, so dass auch das Volumen des sphärischen Bereichs des ersten Angusskanals verringert wird. Dadurch wird mit dem abzutrennenden ersten Schirmanguss weniger Abfallmaterial produziert, was insbesondere bei hochwertigen, teuren Kunststoffformmassen von besonderer Bedeutung ist und zu einer wirtschaftlicheren Fertigung führt.

Vor dem Hintergrund der Abfallverringerung wird die Breite des ersten Angusskanals, d.h. der Abstand zweier gegenüberliegender, den ersten Angusskanal begrenzender Wände orthogonal zur Strömungsrichtung, in der Regel möglichst klein gehalten, um das Gesamtvolumen der Schirmangussgeometrie zu minimieren. Deshalb ist in der Regel die Breite der ersten Formkavität, d.h. die Wandstärke des herzustellenden Vorspritzlings, größer als die Breite des ersten Angusskanals bzw. als die Wandstärke des sich bildenden ersten Schirmangusses. Der Querschnitt der Anbindung der ersten Formkavität an den ersten Angusskanal ist also kleiner als der Querschnitt des Schirmangusses selbst. Dies ist auch dem Wunsch geschuldet, den Schirm leichter von dem Formteil entfernen zu können.

Hierdurch bildet sich jedoch hinter dem Übergang von der Schirmangussgeometrie zur Formkavität, nachfolgend Anschnitt bezeichnet, aus Sicht der Kunststoffformmasse eine Hinterschneidung. Bei einem achsparallelen Einströmen des Kunststoffmaterials von dem ersten Angusskanal in die erste Formkavität kann es dann zu einer so genannten Freistrahlbildung kommen, d.h. zu einer an der Seite des ersten Formkerns voreilenden Strömung, die dann keinen oder einen nur unzureichenden Kontakt zu der Außenwand der ersten Formkavität herstellt. Der Kontakt verbessert sich zwar mit fortschreitendem Einspritzen der Kunststoffformmasse bzw. dem damit verbundenen Druck, der innerhalb der ersten Formkavität aufgebaut wird, jedoch bewirkt auch dies keinen optimalen Kontakt zwischen dem Kunststoffmaterial und der Kavitätsaußenwand. Zum Teil kann dieser Effekt auch auf der Seite des Formkerns festgestellt werden.

Um den vorgenannten Effekt der Freistrahlbildung zu verhindern oder zumindest zu minimieren, kann der konische Bereich des ersten Angusskanals unmittelbar in erste Formkavität münden, so dass die Strömung der Formmasse beim Eintritt in die Kavität winklig zur Formteilachse verläuft und vollumfänglich auf die Innenseite der Außenwand der Formkavität gerichtet ist. Der Kontakt zwischen der Kunststoffformmasse und der Formkavitätsaußenwand kann dadurch verbessert werden. Die genannte Ausführungsvariante führt zu einem im Querschnitt glockenförmigen Schirmanguss.

Es hat sich als besonders günstig herausgestellt, wenn der konische Bereich, insbesondere die Hauptströmungsrichtung, einen Halbkegelwinkel zwischen 20° und 40°, insbesondere 20° bis 30°, vorzugsweise zwischen 22° und 23° mit der Achse des Formkerns/ Formteils (Angussschirmmittenachse) bildet. Hierdurch werden Kontaktverluste zur Formkavitätsaußenwand bestmöglich vermieden.

Bevorzugt weist der erste Angusskanal zwischen seinem sphärischen Bereich und der ersten Formkavität, insbesondere zwischen dem sphärischen Bereich und dem konischen Bereich, einen Bereich auf, der zylindrisch ausgebildet ist. Alternativ oder zusätzlich kann ein weiterer zylindrischer Bereich hinter dem konischen Bereich liegen. Dies hat zwei Effekte. Durch einen zylindrischen Bereich kann zum einen der Abstand zwischen der Einspritzdüse und der Formkavität spezifisch je nach verwendeter Kunststoffformmasse festgelegt werden. Denn der zylindrische Bereich verlängert den Abstand zur Formkavität. Dies ist sinnvoll, wenn besonders hohe Temperaturunterschiede zwischen der Einspritzdüse und der Formkavität vorhanden sein müssen, was folglich eine thermische Trennung bedingt.

Wird als Kunststoffformmasse beispielsweise ein plastifizierter Thermoplast wie PEEK (Polyetheretherketon) zur Herstellung des Formteils verwendet, das bei einer Kavitätstemperatur von ca. 200°C und einer Formmassentemperatur von ca. 400°C zu verarbeiten ist, besitzt die Einspritzdüse respektive der in unmittelbarer Nähe zur Düse befindliche Bereich der ersten Werkzeughälfte entsprechend eine Temperatur über 200°C. Demgegenüber muss eine Formkavität in der Regel während und nach dem Spitzgießen gekühlt werden. Um eine thermische Trennung der Einspritzdüse und der Formkavität zu erreichen, kann die Länge des zylindrischen Bereichs entsprechend festgelegt werden, beispielsweise zwischen 1 mm bis 10mm betragen oder 3% bis 30% des maximalen Außendurchmessers des sphärischen Bereichs des ersten Angusskanals.

Zum anderen bietet der zylindrische Bereich eine Einlaufstrecke für das Kunststoffmaterial, in der sich die Fasern vor dem Eintritt in die Kavität in Strömungsrichtung ausrichten können, so dass diese dann hinsichtlich ihrer Orientierung in der fließenden Kunststoffformmasse bereits definiert in die erste Formkavität eintreten. Dies hat wiederum zur Folge, dass die Mehrheit der Fasern bereits am Anfang der ersten Formkavität in Strömungsrichtung gut ausgerichtet sind, wodurch eine homogene Schwindung entlang der axialen Länge des Formteils erreicht wird und das Formteil dadurch maßhaltiger ist.

Allgemein kann durch die Integration von zylindrischen Geometriestellen bereits in einer frühen Kavitätsfüllungsphase eine gleichmäßigere Faserausrichtung erreicht werden, da ein zylindrischer Angusskanalbereich die Faserausrichtung homogenisiert. Andererseits kann über diese zylindrischen Elemente im Falle eines thermoplastischen Kunststoffs der Abstand zur heißen Seite des Werkzeugs (Düsenseite) bzw. zur Heißkanaldüse optimal für den jeweiligen Werkstoff im Sinne hinreichender thermischer Trennung eingestellt bzw. angepasst werden. Dadurch lässt sich der notwendige Abstand zur eigentlichen Formteilgeometrie optimieren, d.h. die Formteilschwindung wird weniger bzw. so viel wie absolut notwendig durch die heiße Seite thermisch beeinflusst. Hierdurch ergeben sich insbesondere bei der Verarbeitung von Hochtemperaturthermoplasten stabilere Verarbeitungsprozessfenster und letztlich maßhaltigere Formteile mit reproduzierbarer Qualität. Es sei an dieser Stelle darauf hingewiesen, dass das erfindungsgemäße Verfahren nicht auf die Verarbeitung von thermoplastischen Kunststoffen beschränkt ist. Vielmehr können auch Duroplaste oder Elastomere verarbeitet werden.

Der erste Angusskanal kann vor dem Übergang zur Formkavität, d.h. vor dem Anschnitt, eine Wandstärke aufweisen, die mindestens 40% der Wandstärke der Formkavität hinter dem Übergang beträgt. Die aus Sicht der strömenden Kunststoffformmasse hinter dem Anschnitt liegende Hinterschneidung beträgt damit maximal 60% der Wandstärke des ersten Angusskanals unmittelbar vor dem Anschnitt. Durch Anbindung des Schirms mit mind. 40% Wanddickenquerschnitt in Relation zur Wanddicke des Vorspritzlings wird eine gleichmäßige und gute Druckübertragung gewährleistet. Dies hat gegenüber konventionellen gebräuchlichen Schirmangüssen mit sehr kleinem, oft nur wenige 1/10mm großen Anbindungsquerschnitten deutlich Vorteile bei der Prozessführung und der Beeinflussung von Formteilabmessungen bei Hochpräzisionsteilen durch die Nachdruckführung im Spritzgießprozess.

Durch die genannte Hinterschneidung kommt es in der ersten Formkavität zu einem Bereich, in dem die Verstärkungsfasern beim Einströmen der Kunststoffformmasse in die erste Formkavität senkrecht zur Strömungsrichtung, d.h. senkrecht (radial) zur Formteilmittenachse orientiert werden. Dies wiederum führt dazu, dass die bei einem spritzgegossenen Kunststoffformteil stets vorhandene radiale Schwindung in diesem Bereich geringer ausfällt, weil eine radiale Ausrichtung der Fasern die Schwindung in radialer Richtung vermindert. Dies wiederum bewirkt, dass rohrförmige Formteile nach der Verfestigung der Kunststoffformmasse im Bereich des Eintritts der Formmasse in die Kavität, d.h. im Angussschirm nahen Bereich, einen anderen Formteildurchmesser erhalten, als im Angussschirm fernen Bereich, d.h. insbesondere am gegenüberliegenden axialen Ende. Ein Kunststoffformteil erhält dadurch eine ungewünschte trompetenartige Form.

Dies kann vermieden werden, indem die Hinterschneidung in Bezug zur Breite des ersten Angusskanals so gering wie möglich gewählt oder vermieden wird. Um ferner das Volumen des ersten Angusskanals zu minimieren, kann der Anschnitt eine Breite von 40% bis 60% aufweisen. Dies ist ein Kompromiss zwischen der Tatsache, dass der Angusskanal technisch bedingt nicht zu eng sein darf, um die Verstärkungsfasern nicht zu beschädigen, andererseits auch nicht so dick wie die Formkavität sein sollte, da durch das Entfernen des ersten Schirmangusses eine Abfallmenge entsteht, die insbesondere bei der Verwendung hochwertiger, teure Kunststoffformmassen unwirtschaftlich ist. Die genannte Breitenwahl gilt sowohl für eine Ausführungsvariante, bei der der sphärische Bereich axial bzw. achsparallel direkt in die erste Formkavität übergeht, als auch für eine Ausführungsvariante mit einem konischen Bereich, bei der die Kunststoffformmasse schräg zur Formteilachse in die Kavität eintritt, sowie für eine Ausführungsvariante mit einem in die Formkavität mündenden zylindrischen Bereich.

Eine besonders vorteilhafte Weiterbildung ergibt sich, wenn der Angusskanal gleichmäßig auf die Wandstärke der Formkavität erweitert wird. Dies ist beispielsweise möglich, indem sich der sphärische Bereich, der zylindrische Bereich, der konische Bereich oder der weitere zylindrische Bereich im Querschnitt betrachtet trichterförmig aufweitet, um mit gleicher Wandstärke wie die erste Formkavität in diese zu münden. Auch können zwei oder mehr der genannten Bereiche jeweils eine teilweise Aufweitung aufweisen, die dann akkumuliert dazu führt, dass der Anschnitt die Breite der Kavität besitzt. Dies bedeutet, dass dann keine Hinterschneidung vorliegt, d.h. der Anschnitt eine ringförmige Fläche ist, die nachher die Stirnseite des hergestellten Vorspritzlings bildet. Hierdurch wird gänzlich verhindert, dass sich die Verstärkungsfasern im anschnittsnahen Bereich in radialer Richtung ausrichten, so dass entlang der gesamten axialen Länge des herzustellenden Vorspritzlings eine gleichmäßige Schwindung bei einem Erhärten der Kunststoffformmasse vorliegt, wodurch eine besonders gute Maßhaltigkeit erreicht wird. Es wird dabei in Kauf genommen, dass sich das Volumen des ersten Angusskanals und damit die Abfallmenge erhöhen.

Die Erweiterung kann vorzugsweise in dem konischen Bereich des Angusskanals, insbesondere von seinem Beginn an erfolgen oder, sofern ein konischer Bereich bei dem erfindungsgemäßen schirmförmigen ersten Angusskanal nicht vorhanden ist, gegen Ende des sphärischen Bereichs erfolgen, oder auch in einer weiteren Alternative in dem zylindrischen Bereich erfolgen, der sich an den sphärischen Bereich anschließt.

Durch die Herstellung des ersten Schirmangusses im ersten Schritt ist die innenliegende Geometrie des zweiten Angusskanals innenseitig festgelegt. Die außenliegende Geometrie wird durch die zweite äußere Werkzeughälfte bzw. durch die innenseitige Geometrie und Größe ihrer Ausnehmung definiert, denn der zweite schirmförmige Angusskanal liegt zwischen dem Schirmanguss des Vorspritzlings und dieser innenseitigen Geometrie der Ausnehmung. So kann dann auch im zweiten Schritt Kunststoffmaterial zentral in den sphärischen Bereich des zweiten Angusskanals eingespritzt und bogenförmig in diesem geführt werden, um anschließend in die zweite Formkavität einzutreten, die konzentrisch zur ersten Formkavität liegt. Dies bedeutet, dass auch der zweite Angusskanal im Querschnitt zumindest abschnittsweise halbkreisförmig oder halbkreissegmentförmig ist. Die sphärische Geometrie des Angusskanals bietet somit auch für das im zweiten Schritt eingespritzte Kunststoffmaterial strömungsgünstige Eigenschaften.

Des Weiteren weist der zweite Angusskanal in axialer Strömungsrichtung auch dieselben anderen Abschnitte auf, wie der erste Angusskanal, so dass die vorherigen Merkmalserläuterungen sinngemäß auch auf den zweiten Angusskanal zutreffen bzw. realisiert sein können.

Da der erste Schirmanguss, der in dem ersten Spritzgiessschritt hergestellt wird, die innere Begrenzungswand des zweiten Angusskanals bildet, ist es vorteilhaft, dass die Schirmgeometrie des inneren ersten Schirmangusses an ihrer Außenseite möglichst starke Rundungen aufweist, damit sie für die Kunststoffformmasse, die auf den inneren Schirmanguss in dem zweiten Spritzgießschritt aufgespritzt wird, strömungsoptimal ist. Hierzu kann sich gemäß einer weiteren vorteilhaften Weiterbildung an den konischen Bereich ein im Wesentlichen zylindrischer Bereich anschließen, der mit gleicher Wandstärke wie die erste Formkavität in diese mündet und außen eine abgerundete Schulter aufweist, wobei der Übergang vom konischen Bereich zu dem zylindrischen Bereich eine Innenrundung aufweist, deren Radius gleich oder größer dem Radius der Schulter ist. Diese Ausführungsvariante führt im Übergangsbereich zur ersten Kavität zu einer optimierten Außenkontur des ersten Schirmangusses, die in dem erfindungsgemäßen Zwei-Komponenten-Spritzgussverfahrens ermöglicht, auf den erfindungsgemäßen Schirmanguss des hergestellten Kunststoffformteils einen weiteren Schirmanguss mit optimalen Strömungseigenschaften zu platzieren.

Sofern das Formteil eine dritte oder weitere Schicht aufweist, treffen die vorherigen Erläuterungen auch auf das Zusammenwirken der zweiten mit dieser dritten Schicht bzw. jeder weiteren Schicht mit der vorigen Schicht zu. Denn durch die Herstellung des zweiten Schirmangusses im zweiten Schritt ist die innenliegende Geometrie des dritten Angusskanals innenseitig festgelegt. Die außenliegende Geometrie wird durch die dritte äußere Werkzeughälfte bzw. durch die innenseitige Geometrie und Größe ihrer Ausnehmung definiert, denn der dritte schirmförmige Angusskanal liegt zwischen dem Schirmanguss des Zwischenspritzlings und dieser innenseitigen Geometrie der dritten Ausnehmung.

So kann dann auch im dritten Schritt Kunststoffmaterial zentral in den sphärischen Bereich des dritten Angusskanals eingespritzt und dann bogenförmig in diesem geführt werden, um anschließend in die dritte Formkavität einzutreten. Dies bedeutet, dass auch der dritte Angusskanal im Querschnitt zumindest abschnittsweise halbkreisförmig oder halbkreissegmentförmig ist. Die sphärische Geometrie des Angusskanals bietet somit auch für das im dritten Schritt eingespritzte Kunststoffmaterial strömungsgünstige Eigenschaften.

Der erste und/ oder zweite Formkern kann an seinem der ersten Einspritzdüse gegenüberliegenden Bereich eine topfförmige, einen Freiraum bildende Ausnehmung aufweisen, die zum Schmelzefang, d.h. als Schmelzefänger dient. Diese Ausnehmung bewirkt, dass die aus der ersten Einspritzdüse axial austretende Kunststoffformmasse sich zunächst unmittelbar vor dieser Düse in der Ausnehmung ein Reservoir bildend sammelt, wobei der Kunststoff dann ausgehend von diesem Reservoir radial in den sphärischen Formbereich des ersten Angusskanals eintritt und bogenförmig umgeleitet wird. Dies bewirkt bei zumindest einem Teil der Verstärkungsfasern eine erste definierte Orientierung, insbesondere in Strömungsrichtung.

Darüber hinaus hat der Schmelzefänger die Wirkung, einen sich an der ersten Einspritzdüse gegebenenfalls gebildeten Pfropfen verfestigter Formmasse aufzufangen, der sich möglicherweise nach dem letzten Spritzgießvorgang der Düse gebildet haben kann, so dass verfestigte Teile der Kunststoffformmasse nicht in den ersten Angusskanal und damit nicht in die erste Formkavität gelangen können. Dies würde die Materialeigenschaften, insbesondere die mechanische Stabilität, die Schwindung und damit die Maßhaltigkeit aufgrund der lokal entstehenden Faserinhomogenität stark beeinträchtigen. Durch die Verwendung eines Schmelzfängers, d.h. der erfindungsgemäßen Ausnehmung gegenüber der ersten Einspritzdüse, wird ein etwaiger Pfropfen aufgefangen und die Kunststoffformmasse strömt an diesem vorbei in den sphärischen ersten Angusskanal hinein.

Die Ausnehmung im ersten Formkern bildet somit eine Art Topf mit einem insbesondere runden Querschnitt, so dass die Herstellung besonders einfach ist. Der Querschnitt sollte in den Abmessungen mindestens der Breite, d.h. dem Durchmesser der Düsenöffnung der ersten Einspritzdüse entsprechen, wobei vorzugsweise ein Querschnitt gewählt werden sollte, der 10% bis 30% breiter ist, als die Düsenöffnung, so dass gewährleistet ist, dass ausreichend Kunststoffformmasse an einem etwaig aufgefangenen Pfropfen vorbeifließen kann.

Zur Vermeidung von Scherung der Kunststoffformmasse und der darin enthaltenen Verstärkungsfasern ist es von Vorteil, den Übergangsbereich des ersten Formkerns von der Ausnehmung im ersten Formkern zum sphärischen Bereich des ersten Angusskanals abzurunden, insbesondere stark abzurunden beispielsweise mit einem Radius, der mindestens 2/3 der Schirmwandstärke entspricht. Dabei wird auch der Einströmbereich in den sphärischen Teil des ersten Angusskanals verbreitert, wodurch die Faserausrichtung unterstützt wird.

Vorzugsweise kann ein Auswerfer zum Auswerfen des hergestellten Rohformteils koaxial im ersten Formkern geführt sein. Ein solcher Auswerfer kann auch bei dem zweiten Formkern vorhanden sein. Das zur ersten Einspritzdüse gerichtete axiale Ende begrenzt den ersten Angusskanal mit. Dies führt dazu, dass die axiale Stirnseite des Auswerfers an der Innenseite des ersten Schirmangusses des hergestellten Vorspritzlings anliegt, so dass der Auswerfer bei einer Relativbewegung zum ersten Formkern eine Druckkraft auf den ersten Schirmanguss ausübt, wodurch das Rohformteil axial von dem ersten Formkern herunter geschoben wird. Bei diesem Abstreifvorgang wird das Rohformteil zwangsläufig mechanisch beansprucht, insbesondere aufgrund der Haftung auf dem ersten Formkern gedehnt, wobei diese Beanspruchung bei der Verwendung eines Auswerfers, der lediglich am Schirm angreift, auf den Schirm begrenzt ist. Das hergestellte hohle Kunststoffformteil wird dadurch nicht mechanisch belastet.

Weist der erste oder zweite Formkern eine Ausnehmung als Schmelzefänger auf, kann das zur jeweiligen Einspritzdüse gerichtete axiale Ende des Auswerfers die Ausnehmung bzw. den Freiraum zumindest bodenseitig begrenzen. Dies bedeutet, dass im verfestigten Zustand der Kunststoffformmasse vor dem Auswerfer ein massiver Block verfestigten Kunststoffs liegt, gegen den der Auswerfer drücken kann. Hierdurch wird die von dem Auswerfer ausgeübte Kraft besser auf den ersten und den zweiten Schirmanguss übertragen und dieser dadurch beim Abstreifen des Rohformteils von dem ersten Formkern weniger gedehnt.

Das axiale Ende des Auswerfers kann T-förmig sein. Insbesondere kann es stirnseitig konvex ausgebildet sein, beispielsweise stirnseitig die Form eines Kugelabschnitts besitzen, der die radial innen liegende Wand des ersten Angusskanals bildet. Hierdurch wird eine großflächige Kraftübertragung des Auswerfers zum ersten Schirmanguss erreicht. In dieser Ausführungsvariante bildet das axiale Ende des Auswerfers quasi den vorderen Teil des ersten Formkerns. Sofern der erste Formkern eine Ausnehmung zum Schmelzefang aufweist, ist diese dann in dem Auswerfer vorsehen.

Die Auswerferfunktion kann zudem auch als sog. Z-Auswerfer ausgeführt sein, um das Formteil bei der Werkzeugöffnungsbewegung sicher auf der Auswerferseite zu halten.

Des Weiteren ist es auch möglich, dass das axiale Ende des Auswerfers eine Hinterschneidung besitzt. Diese bewirkt, dass der Auswerfer das Rohformteil bei der Werkzeugöffnungsbewegung sicher auf dem ersten Formkern hält und das Rohrformteil nicht aufgrund starker Anhaftungskräfte in der zweiten äußeren Werkzeughälfte haften bleibt.

Eine Hinterschneidung kann beispielsweise dadurch erreicht werden, dass der Endabschnitt des Auswerfers im Querschnitt Z-förmig geformt ist. Dies bedeutet, dass am axialen Ende des Auswerfers an einer der Randseite ein Zahn in axialer Richtung absteht, der zu einer Seite hin derart abgeschrägt ist, dass er an seinem freien Ende breiter ist als an seiner Basis. Die Schmelzefängergeometrie ist dadurch in axialer Richtung verlängert.

Weitere Merkmale, Vorteile und technische Eigenschaften der Erfindung werden nachfolgend anhand von Ausführungsbeispielen und den beigefügten Zeichnungen näher erläutert. Es zeigen:
- Figur 1:: Spritzgusswerkzeug zum Herstellen eines einschichtigen Formteils im geschlossenen Zustand vor dem Einspritzvorgang
- Figur 2:: Spritzgusswerkzeug nach Figur 1 mit geöffneter Düsennadel
- Figur 3:: Spritzgusswerkzeug nach Figur 1 mit geöffneter Düsennadel und ausgebildetem Spritzling
- Figur 4:: Spritzgusswerkzeug nach Figur 1 mit geschlossener Düsennadel und ausgebildetem Spritzling
- Figur 5:: Seitenansicht des hergestellten einschichtigen Rohformteils
- Figur 6:: perspektivische Ansicht des hergestellten einschichtigen Rohformteils
- Figur 7:: Axialschnitt durch das einschichtigen Rohformteil
- Figur 8:: Axialschnitt durch das einschichtigen Rohformteil mit Bemaßungszeichen
- Figur 9:: Konizitätsangabe zum einschichtigen Rohformteil
- Figur 10:: perspektivische Ansicht eines hergestellten zweischichtigen Rohformteils
- Figur 11:: Axialschnitt durch das zweischichtige Rohformteil
- Figur 12:: Spritzgusswerkzeug zum Herstellen eines zweischichtigen Formteils im geöffneten Zustand
- Figur 13:: Spritzgusswerkzeug nach Figur 12 im geschlossenen Zustand und hergestelltem Vorspritzling
- Figur 14:: Spritzgusswerkzeug nach Figur 12 im geöffneten Zustand mit Vorspritzling auf erstem Formkern vor erster äußerer Werkzeughälfte

- Figur 15:: Spritzgusswerkzeug nach Figur 12 im geöffneten Zustand mit Vorspritzling auf erstem Formkern vor zweiter äußerer Werkzeughälfte
- Figur 16:: Spritzgusswerkzeug nach Figur 12 im geschlossenen Zustand mit Vorspritzling in zweiter äußerer Werkzeughälfte
- Figur 17a:: Spritzgusswerkzeug nach Figur 12 im geschlossenen Zustand mit hergestelltem Vorspritzling in erster und hergestelltem Rohformteil in zweiter äußerer Werkzeughälfte
- Figur 17b:: Vergrößerung der zweiten äußeren Werkzeughälfte nach Figur 17a
- Figur 18:: Spritzgusswerkzeug nach Figur 12 im geöffneten Zustand und ausgeworfenem Rohformteil
- Figur 19:: Spritzgusswerkzeug nach Figur 12 im geöffneten Zustand mit Vorspritzling auf zweitem Formkern vor zweiter äußerer Werkzeughälfte
- Figur 20:: perspektivische Ansicht des Spritzgusswerkzeugs mit Drehteller
- Figur 21:: perspektivische Ansicht eines hergestellten Rohformteils
- Figur 22:: perspektivische Ansicht des fertigen Formteils
- Figur 23:: axialer Querschnitt des fertigen Formteils
- Figur 24:: perspektivische axiale Querschnittsansicht eines anderen Rohformteils
- Figur 25:: perspektivische axiale Querschnittsansicht des aus dem anderen Rohformteil hergestellten fertigen Formteils

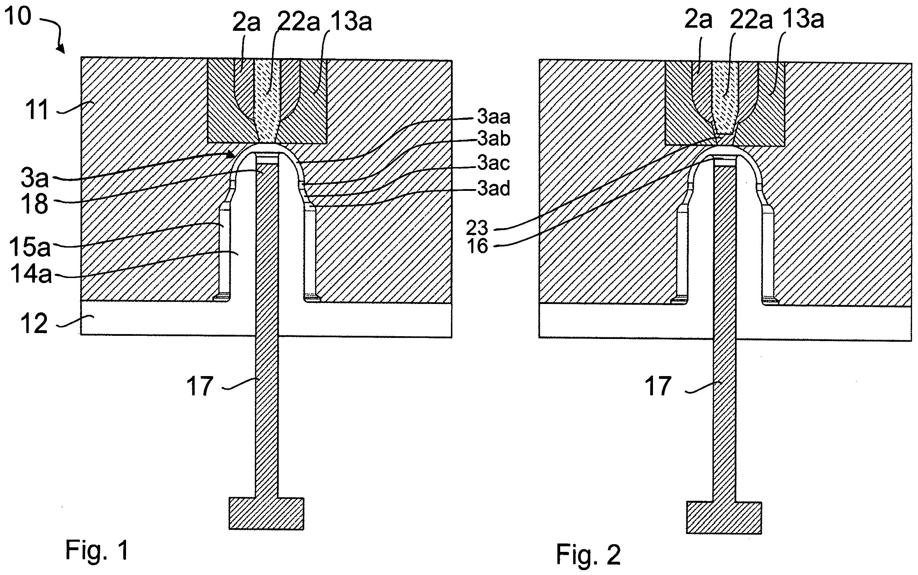

Figuren 1 bis 4 zeigen ein Spritzgusswerkzeug 10 zur Herstellung eines einschichtigen hohlen Formteils, das eine äußere Werkzeughälfte 11 und eine innere Werkzeughälfte 12 umfasst. Die äußere Werkzeughälfte 11 weist eine Einspritzeinheit mit einer Einspritzdüse 13a und mit einer eine Öffnung 23 verschließbaren Düsennadel 22a auf. Die Düsennadel 22a erstreckt sich durch ein Reservoir eines plastifizierten Kunststoffmaterials 2a. Die innere Werkzeughälfte 12 umfasst einen Formkern 14a, der einstückig mit einer nicht näher bezeichneten Werkzeugplatte ausgebildet ist und der sich im geschlossenen Zustand des Spritzgusswerkzeugs 10 in die äußere Werkzeughälfte 11 koaxial zur Einspritzdüse 13a hinein erstreckt. Innere und äußere Werkzeughälfte 11, 12 sind relativ zueinander koaxial beweglich. Zwischen dem Formkern 14a und der äußeren Werkzeughälfte 11 ist eine mit dem Kunststoffmaterial 2a füllbare, rotationssymmetrische Formkavität 15a in Gestalt eines Ringraumes ausgebildet, die an einem Ende über einen schirmförmigen Angusskanal 3a an die Einspritzdüse 13a anschließt. Der Angusskanal 3a bildet nach der Befüllung mit Kunststoff 2a einen Schirmanguss 4a aus, der später von dem hergestellten Rohformteil 1b abzutrennen ist, um das gewünschte Formteil zu erhalten.

Das durch den in den Figuren 1 bis 4 dargestellten Herstellungsprozess herzustellende Formteil ist ein Kunststoffgleitlager für eine Pumpe, insbesondere eine Kreiselpumpe in Nassläuferbauweise. Das Kunststoffmaterial 2a ist ein Thermoplast, beispielsweise PEEK, PPS (Polyphenylensulfid) oder PEI (Polyetherimid), mit Glas- oder Kohlefasern verstärkt.

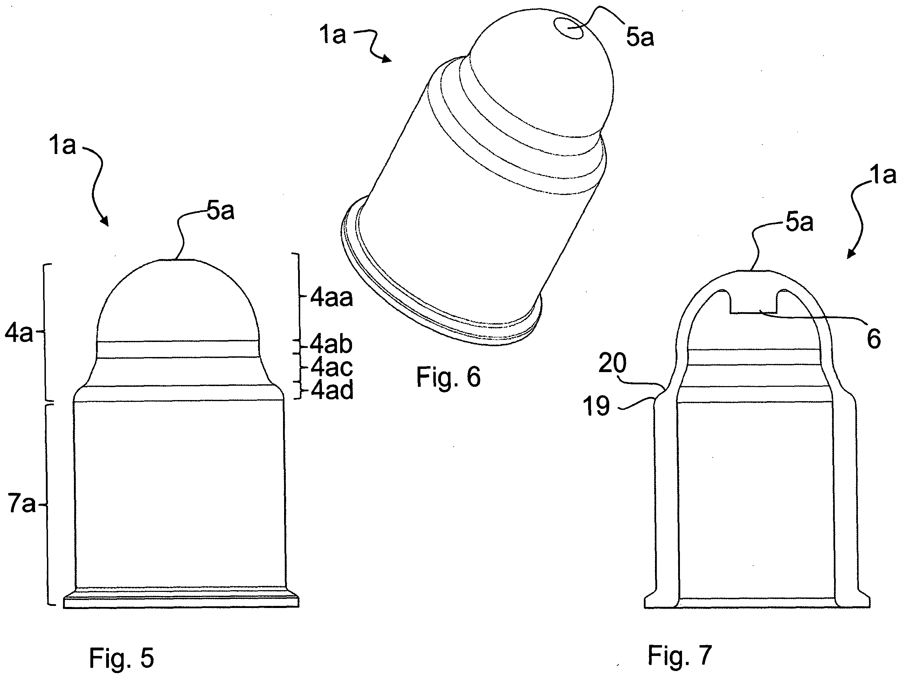

Der Angusskanal 3a ist rotationssymmetrisch und besitzt in axialer Richtung betrachtet mehrere Bereiche 3aa, 3ab, 3ac, 3ad unterschiedlicher Geometrie, auf die nachfolgend im Einzelnen unter Bezug auf die Figuren 5 bis 7 eingegangen wird.

Figur 1 zeigt das Spritzgusswerkzeug 10 im geschlossenen Zustand. Das heißt, die innere Werkzeughälfte 12 ist mit dem Formkern 14a in die äußere Werkzeughälfte 11 hineingefahren und bildet zwischen Formkern 14a und der ersten Werkzeughälfte 11 die Formkavität 15a aus. Die Öffnung 21 der Einspritzdüse 13 mündet direkt in den sphärischen Bereich 3aa des Angusskanals 3a, allerdings verschließt in Figur 1 die Düsennadel 22a der Einspritzdüse 13a noch die Öffnung 23.

Figur 2 zeigt das Spritzgusswerkzeug mit geöffneter Einspritzdüse 13a. Die Düsennadel 22a ist von ihrem Dichtsitz in der Öffnung 23 abgehoben, so dass die Öffnung 23 freigegeben wird und Kunststoffformmasse 2a in den Angusskanal 3a und anschließend in die Formkavität 15a eintreten kann. Die Formkavität 15a füllt sich damit ausgehend von dem zentralen Anspritzpunkt an der Öffnung 23 zunehmend in axialer Richtung.

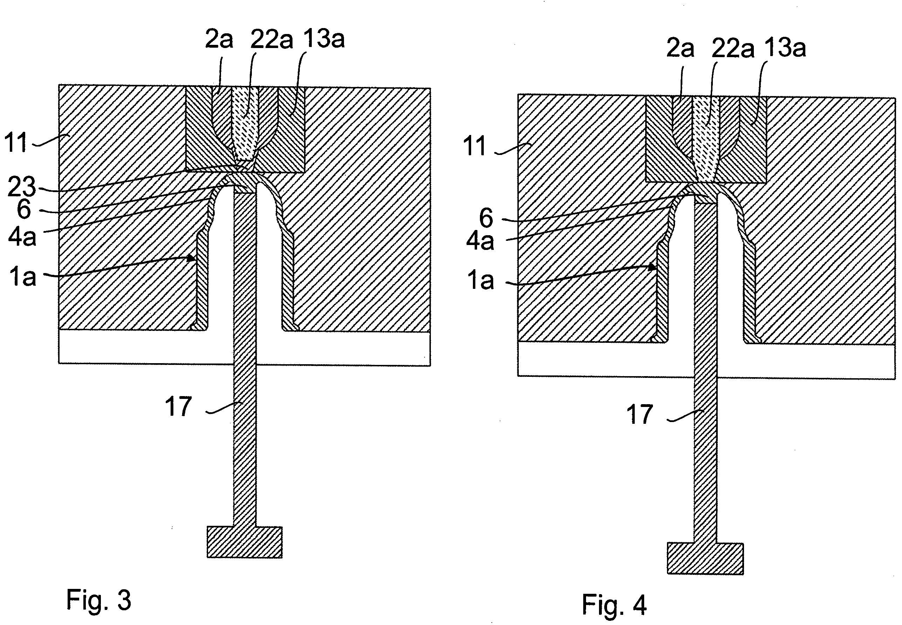

In Figur 3 ist die Einspritzdüse 13a noch immer geöffnet. Die Formkavität 15a ist vollständig mit Formmasse 2a gefüllt und beherbergt einen Spritzling, der eine Rohform 1a des herzustellenden einschichtigen Formteils 1 darstellt. Die Rohform 1a umfasst das gewünschte Formteil und einen den Angusskanal 3a ausfüllenden Schirmanguss 4a.

In Figur 4 ist die Einspritzdüse 13a wieder geschlossen, und die Düsennadel 22a begrenzt den Angusskanal 3a unter Ausbildung einer Düsenanlagefläche 5a am Schirmanguss 4a mit (siehe Figuren 5-7). Die Düsenanlagefläche 5a bildet somit den zentralen Anspritzpunkt für den Spritzling 1a. Dies ist insbesondere für Mehrkavitätenwerkzeuge vorteilhaft, wodurch kalte Unterverteiler, die später zu Abfallmaterial führen, oder heiße Schmelzeverteiler (Heißkanalbalken etc.) vermieden werden können. Die Anlagefläche 5a kann zudem dem jeweiligen Düsenquerschnitt angepasst werden.

Der Angusskanal 3a umfasst in den Figuren 1 bis 4 vier Bereiche 3aa, 3ab, 3ac, 3ad, die axiale Abschnitte bilden. Der erste Bereich 3aa ist sphärisch ausgebildet. Er entspricht der Form einer vollständigen Halbkugelschale (Kalotte) und verteilt den Kunststoff von dem zentralen Anspritzpunkt 5a gleichmäßig schirmartig zunächst radial und dann mit zunehmendem axialen Richtungsvektor bogenförmig zur Formkavität 15a. An den ersten Bereich 3aa schließt sich in Fließrichtung ein zweiter Bereich 3ab an, der zylindrisch ausgebildet ist, d.h. einen Ringraum konstanten Durchmessers bildet. An den zweiten Bereich 3ab schließt sich in Fließrichtung ein dritter Bereich 3ac an, der konisch ausgebildet ist, d.h. einen Ringraum mit steigendem Durchmesser bildet. Schließlich schließt sich an den dritten Bereich 3ac in Fließrichtung ein vierter Bereich 3ad an, der ebenfalls zylindrisch ausgebildet ist und vollumfänglich in die Formkavität 15a übergeht.

Wie insbesondere Figur 2 verdeutlicht, wird ausgehend von der Einspritzdüse 13a das Kunststoffmaterial 2a zentral in axialer Richtung in den sphärischen Bereich 3aa eingespritzt und dann bogenförmig in dem erfindungsgemäßen Angusskanal 3a geführt, um anschließend in die Formkavität 15a einzutreten. Der sphärische Bereich 3aa hat somit die Aufgabe, die in axialer Richtung und von einem zentralen Punkt eingespritzte Formmasse 2a bogenförmig umzulenken und gleichzeitig auf einen ringförmigen Angusskanal 3ab zu verteilen. Die sphärische Geometrie des Angusskanals 3a bietet besonders strömungsgünstige Eigenschaften für die Kunststoffformmasse 2a, weil das Kunststoffmaterial 2a weniger geschert wird, so dass die Verstärkungsfasern und etwaige Füllstoffe, wie beispielsweise Glasfasern und/ oder Kohlefasern, geringer beschädigt werden und kein Verstrecken der Makromoleküle des Kunststoffpolymers 2a stattfindet. Die Verstärkungsfasern richten sich während der Durchströmung in dem sphärischen Angusskanal 3a in Strömungsrichtung aus, so dass sie beim Eintritt in die Formkavität 15a keine ungeordnete Struktur mehr aufweisen. Dies führt im Weiteren zu besseren, homogenen und reproduzierbaren Formteileigenschaften.

Durch den ersten zylindrischen Bereich 3ab wird der Abstand zwischen der heißen Einspritzdüse 13a und der zu kühlenden Formkavität 15a vergrößert, so dass eine bessere thermische Trennung dieser beiden Komponenten erreicht wird. Des Weiteren bildet der zylindrische Bereich 3ab eine Einlaufstrecke für das Kunststoffmaterial 2a, in der sich die Fasern noch besser in Strömungsrichtung ausrichten können, weil die Strömung hier nicht die Richtung ändert.

Durch die Verwendung des konischen Bereichs 3ac wird der Durchmesser des am Ende des sphärischen Bereichs 3aa, bzw. am Ende des zylindrischen Bereichs 3ab vorhandenen Ringraumes auf einen Ringraum größeren Durchmessers erweitert, insbesondere in etwa auf den Durchmesser des Ringraumes, den die Formkavität 15a besitzt. Dies bedeutet, dass der Ringraum am Ende des konischen Bereichs 3ac größer ist als der Ringraum am Ende des sphärischen Bereichs 3aa. Hierdurch wird erreicht, dass auch das Volumen des sphärischen Bereichs 3aa des Angusskanals 3a kleiner ist im Vergleich zu dem Volumen eines sphärischen Bereichs, dessen Ende einen Ringraum gleichen Durchmessers wie die Formkavität 15a besitzt. Dadurch wird mit dem abzutrennenden Schirmanguss 4a weniger Abfallmaterial produziert, was insbesondere bei hochwertigen, teuren Kunststoffformmassen von besonderer Bedeutung ist und zu einer wirtschaftlicheren Fertigung führt.

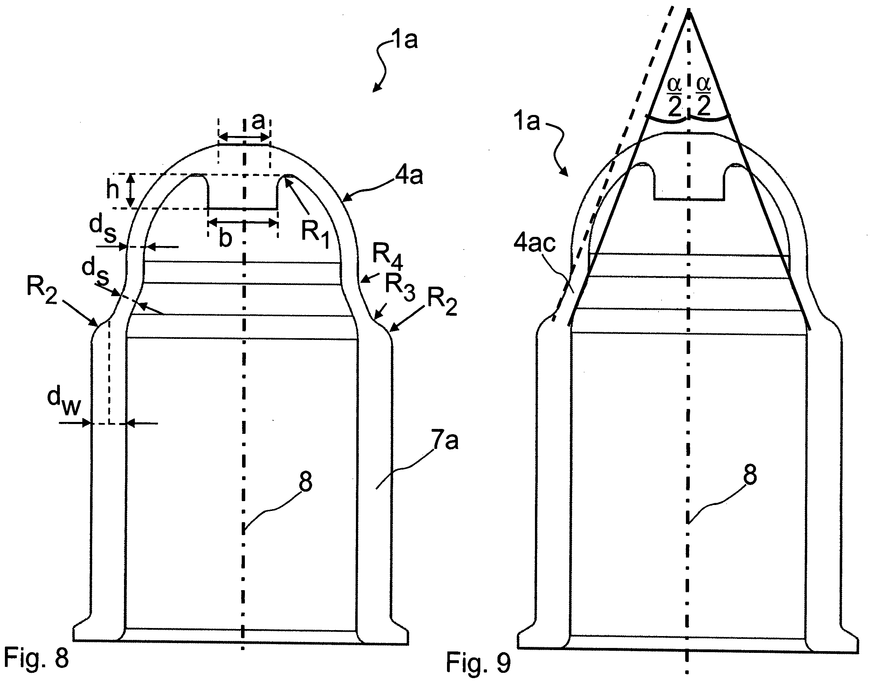

An den konischen Bereich 3ac schließt sich der weitere, vergleichsweise kurze zylindrische Bereich 3ad an. Dieser mündet mit gleicher Wandstärke wie die Formkavität 15a in diese hinein. Der Anschnitt der Formkavität 15a entspricht damit der gesamten Stirnfläche des einschichtigen Formteils. Aufgrund des konischen Bereichs 3ac strömt der Kunststoff in einem Winkel α/2 (siehe Figur 9) zur Formkernachse 8 in den zylindrischen Bereich 3ad hinein. Dies verhindert das bekannte Phänomen der sogenannten Freistrahlbildung, d.h. ein Voreilen des Kunststoffs 2a am Formkern 14a, und bewirkt einen guten Kontakt der Formmasse 2a mit der Kavitätsaußenwand. Die Breite des konischen Bereichs 3ac, d.h. der Abstand zweier gegenüberliegender, den Angusskanal 3a im konischen Bereich 3ac begrenzender Wände orthogonal zur Strömungsrichtung ist geringer als die Breite des zweiten zylindrischen Bereichs 3ad, so dass hinter dem Eintritt der Formmasse 2a in den zylindrischen Bereich 3ad eine Hinterschneidung vorliegt und der zylindrische Bereich 3ad dann stufenfrei in die Formkavität 15a übergehen kann.

Die Figuren 5 bis 9 zeigen den aus dem Werkzeug 10 entnommenen Spritzling, d.h. das Rohformteil 1a bestehend aus dem herzustellenden einschichtigen Formteil und dem noch zu entfernenden Schirmanguss 4a. Dieser ist in Entsprechung zu den vier Axialabschnitten des Angusskanals 3a in vier geometrisch unterschiedliche

Axialabschnitte 4aa, 4ab, 4ac, 4ad eingeteilt, siehe insbesondere Figur 5. Figur 5 zeigt eine Seitenansicht des Rohformteils 1a, Figur 6 eine perspektivische Ansicht und Figuren 7 bis 9 jeweils einen axialen Querschnitt.

Der erste Axialabschnitt 4aa ist halbkugelschalenförmig und wird von dem sphärischen Bereich 3aa des Angusskanals 3a ausgebildet. Der zweite Axialabschnitt 4ab ist hohlzylinderförmig und wird von dem zylindrischen Bereich 3ab des Angusskanals 3a ausgebildet. Der dritte Axialabschnitt 4ac ist trichterabschnittförmig und wird von dem konischen Bereich 3ac des Angusskanals 3a ausgebildet. Schließlich ist der vierte Axialabschnitt 4ad ebenfalls hohlzylinderförmig und wird von dem zweiten zylindrischen Bereich des Angusskanals 3a ausgebildet.

Wie Figur 8 zu erkennen gibt, ist die Wandstärke d_{S} des Schirmangusses 4a bei den ersten drei Axialabschnitten 4aa, 4ab, 4ac identisch. Sie ist jedoch kleiner als die Wandstärke d_{W} des Formteils, wodurch die Abfallmenge verringert wird. Die Wanddicke des vierten Axialabschnitts 4ad ist größer als bei den übrigen Axialabschnitten 4aa, 4ab, 4ac und entspricht der Wandstärke d_{W} des Formteils.

Der vierte Axialabschnitt 4ad weist außen eine abgerundete Schulter 19 auf (siehe Figur 7). Ferner ist der Übergang vom konischen Bereich 4ac zu dem zylindrischen Bereich 4ad durch eine Innenrundung 20 gebildet. Diese Ausführungsvariante gemäß Figuren 5 bis 9 führt zu einer optimierten Außenkontur des Schirmangusses 4a, welche in einem Zwei-Komponenten-Spritzgussverfahrens ermöglicht, auf den erfindungsgemäßen Schirmanguss 4a des Spritzlings einen erfindungsgemäßen weiteren Schirmanguss 4b mit optimalen Strömungseigenschaften zu platzieren.

Wie die Querschnittsdarstellungen in den Figuren 7 bis 9 zeigen, weist der Schirmanguss 4a unmittelbar vor dem zentralen Anspritzpunkt 5a einen Stumpf 6 aus Kunststoffvollmaterial auf. Unter Bezugnahme auf die Form des Angusskanals 3a in den Figuren 1 und 2 entsteht dieser Stumpf 6 dadurch, dass der Formkern 14a an seinem der Einspritzdüse 13a gegenüberstehenden Bereich eine topfförmige Ausnehmung 16 aufweist (siehe Figur 2), die zum Auffangen von Schmelze, d.h. als Schmelzefänger dient. Die Ausnehmung 16 bewirkt, dass sich die aus der Einspritzdüse 13a axial austretende Kunststoffformmasse 2a zunächst unmittelbar vor dieser Düse 13a in der Ausnehmung 16 ein Reservoir bildend sammelt, wobei der Kunststoff 2a dann ausgehend von diesem Reservoir radial in den sphärischen Formbereich 3a des Angusskanals 3a eintritt und bogenförmig um 90° umgelenkt wird. Dies bewirkt bei zumindest einem Teil der Verstärkungsfasern eine erste definierte Orientierung, insbesondere eine Ausrichtung in Strömungsrichtung.

Darüber hinaus hat der Schmelzefänger die Wirkung, einen sich möglicherweise aus dem letzten Einspritzzyklus an der Einspritzdüse 13a gebildeten Pfropfen "kalter Schmelze", d.h. verfestigter Formmasse aufzufangen, so dass dieser nicht den Angusskanal 3a verstopft.

Die Ausnehmung 16 im Formkern 14a bildet einen Topf mit einem vorzugsweise runden Querschnitt. Anhand von Figur 8 wird deutlich, dass der Durchmesser b der Ausnehmung 16 mindestens der Breite a, d.h. dem Durchmesser der Düsenöffnung 23 entsprechen muss. Der Durchmesser b der Ausnehmung 16 beträgt beispielsweise das 1,4-fache bis 1,5-fache des Durchmessers a der Düsenöffnung 23. Die Tiefe h der Ausnehmung 16 beträgt bevorzugt zwischen 40% und 50% des Durchmessers b der Ausnehmung 16. Dies gewährleistet, dass ausreichend Kunststoffformmasse 2a an einem möglicherweise aufgefangenen Pfropfen vorbeifließen kann.

Zur weiteren Vermeidung von Scherung der Kunststoffformmasse 2a und der darin enthaltenen Verstärkungsfasern ist der Übergangsbereich des Formkerns 14a von der Ausnehmung 16 zum sphärischen Bereich 3aa des Angusskanals 3a hin mit einem Radius R₁ abgerundet (siehe Figur 8). Dieser Radius R₁ beträgt bevorzugt 2/3 der Schirmwandstärke d_{S} bzw. der Breite des Angusskanals 3a. Die Schmelze 2a kann dann scherungsfrei in den sphärischen Bereich 3aa einströmen und kalte Schmelzepfropfen werden wirksam in der zylindrischen Ausnehmung 16 zurückgehalten.

Die Angussgeometrie des Angusskanals 3a ist an ihrer zentralen Stirnseite zur Schaffung der Anlagefläche 5a für die Heißkanaldüse 13a bzw. für die Düsennadel 22a abgeflacht. Dies ist in Figur 8 gut erkennbar. An dieser Stirnseite bildet die Anlagefläche 5a ein Plateau.

Wie aus Figur 8 weiter ersichtlich ist, beträgt die Wandstärke d_{S} des Schirmangusses 4a in den oberen drei Axialabschnitten 4aa, 4ab, 4ac bzw. die Breite des Angusskanals 3a in den oberen drei Bereichen 3aa, 3ab, 3ac 40% bis 50% der Wandstärke d_{W} des herzustellenden Formteils. Die Wandstärke d_{S} des vierten Axialabschnitts 4ad bzw. die Breite des vierten Angusskanalbereichs 3ad entspricht dagegen direkt der Wandstärke d_{W} des herzustellenden Formteils. Die Schulter 19 des vierten Axialabschnitts 4ad besitzt dann einen Radius R₂, der vorzugsweise der Hälfte der Formteilwandstärke d_{W} entspricht. Zur Ausbildung der Schulter 19 besitzt der Angusskanal 3a eine korrespondierende Innenrundung im zweiten zylindrischen Bereich 3ad im äußeren Werkzeugteil 11.

Figur 8 zeigt weitere Radien R₃ und R₄. Mit R₃ ist der Innenradius der Außengeometrie des Schirmangusses 4a im Übergang des konischen Axialabschnitts 4ac zum zweiten zylindrischen Axialabschnitt 4ad bezeichnet. Mit R₄ ist der Innenradius der Außengeometrie des Schirmangusses 4a im Übergang des ersten zylindrischen Axialabschnitt 4ab zum konischen Axialabschnitt 4ac bezeichnet. Beide Radien entsprechen bevorzugt dem einfachen bis zweifachen Schulterradius R₂, d.h. 50% bis 100% der Formteilwandstärke d_{W}.

Figur 9 veranschaulicht die Konizität des konischen Bereichs 3ac bzw. des dritten Axialabschnitts 4ac. Da der konische Axialabschnitt 4ac über seine axiale Länge gleich dick ist, d.h. die Innenwand und die Außenwand parallel verlaufen (siehe gestrichelte Linie), besitzen die Hauptströmungsrichtung, die Innenwandfläche und die Außenwandfläche des konischen Axialabschnitts 4ac bzw. des entsprechenden Bereichs 3ac des Angusskanals 3 denselben Halbkegelwinkel α/2 zur Formteilachse 8, der gemäß Figur 9 ca. 23.2° beträgt, so dass ein Kegelöffnungswinkel α des konischen Schirmbereichs 4aa von ca. 46,4° vorliegt. Unter besagtem Halbkegelwinkel α/2 fließt die Schmelze 2a in den zweiten zylindrischen Bereich 3ad des Angusses 3a ein, oder im Falle des Fehlens eines solchen Bereichs in die Formkavität 15a ein.

Wie in den Figuren 1 bis 4 weiter zu sehen ist, weist die innere Werkzeughälfte 12 des erfindungsgemäßen Spritzwerkzeugs 10 einen Auswerfer 17 auf, der koaxial durch den Formkern 14a hindurch geführt ist. Dessen zur Einspritzdüse 13a gerichtetes axiales Ende 18 begrenzt den Angusskanal 3a mit, wobei das axiale Ende 18 des Auswerfers 17 die Ausnehmung 16 bodenseitig begrenzt. Dies führt dazu, dass die axiale Stirnseite des Auswerfers 17 an dem nach dem Spritzgießen gebildeten Stumpf 6 und damit an der Innenseite des Schirmangusses 4a des hergestellten Spritzlings anliegt, so dass der Auswerfer 17 bei einer Relativbewegung gegenüber dem Formkern 14a eine Druckkraft auf den Stumpf 6 und damit auf den Schirmanguss 4a ausüben kann, wodurch der Spritzling axial von dem Formkern 14a herunter geschoben wird. Das hergestellte hohle Kunststoffformteil wird dadurch nicht mechanisch belastet.

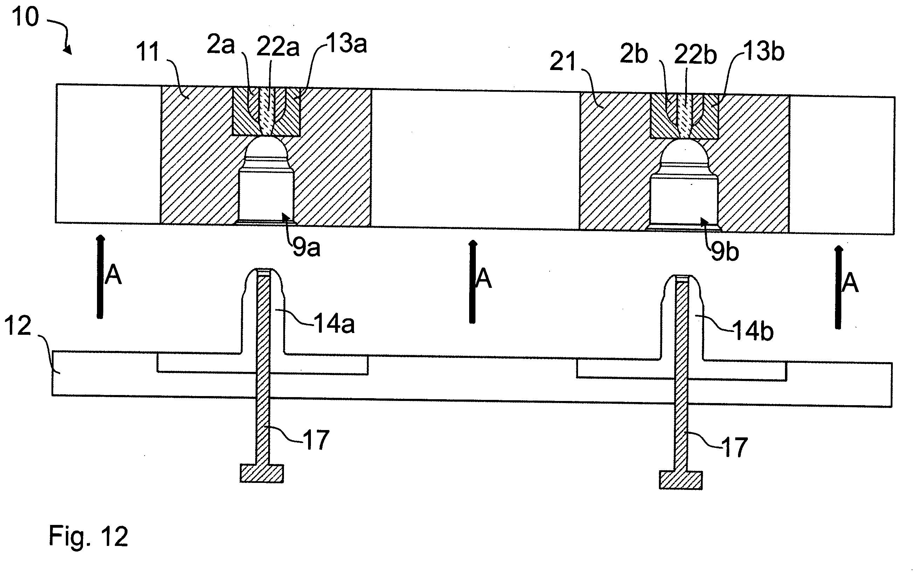

Die Angussschirmgeometrie, wie in Figur 8 gezeigt, ist strömungstechnisch durch die Verrundungen/Radien so optimiert, dass eine oder mehrere weitere Kunststoffkomponenten strömungsgünstig, also mit wenig Scherkräften und optimaler Faserorientierung um den Schirmanguss 4a des Rohformteils 1a herum gespritzt werden kann/ können, wobei das Rohrformteil 1a dann einen Vorspritzling bildet. Dies ist in den Figuren 12 bis 19 veranschaulicht.

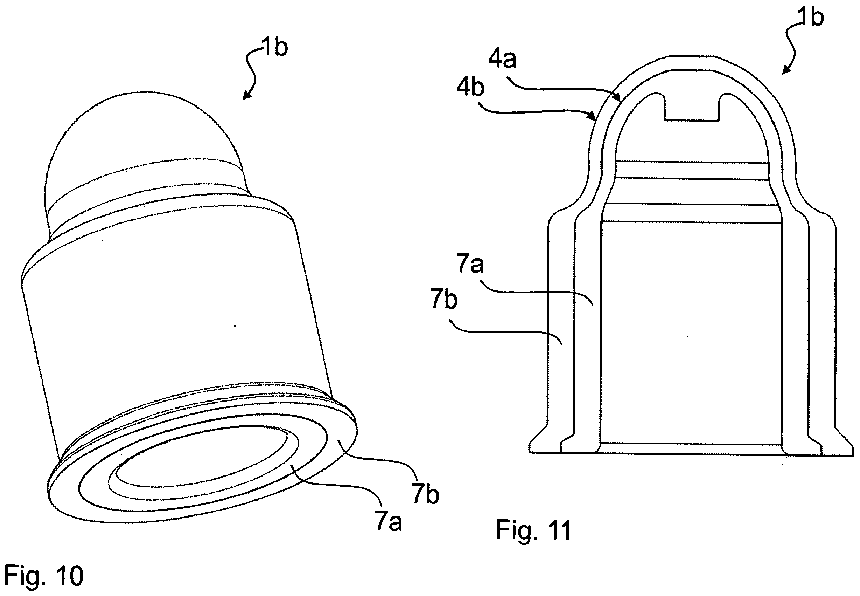

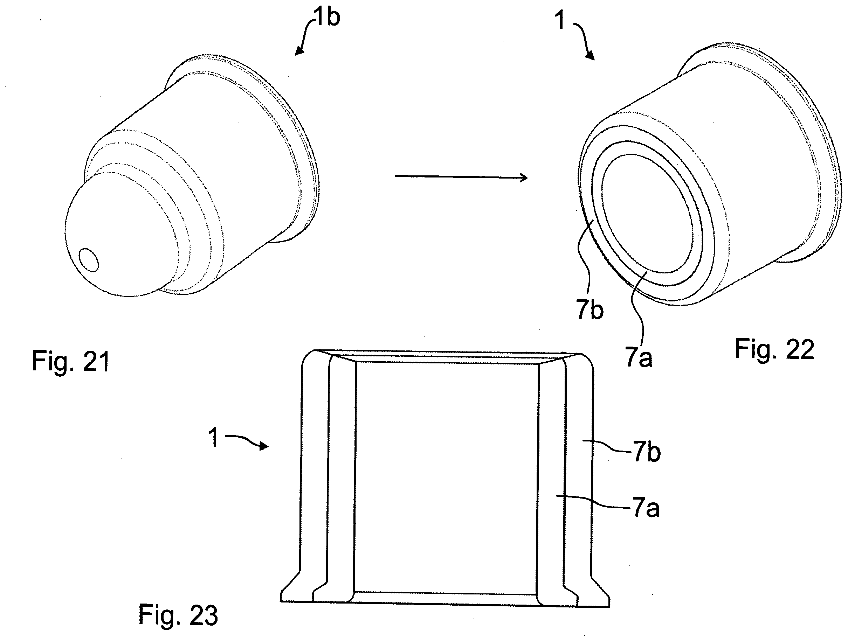

Figuren 10 und 11 zeigen ein zweischichtiges Rohformteil 1b in perspektivischer (Figur 10) und in Querschnittsdarstellung (Figur 11). Es besitzt eine innere Kunststoffschicht, die von dem in den Figuren 5 bis 9 gezeigten und zuvor beschriebenen Rohformteil 1a gebildet ist, welches nun als Vorspritzling 1a betrachtet wird. Der Vorspritzling 1a besteht aus einem inneren Formteilabschnitt 7a und dem Schirmanguss 4a, der nachfolgend als erster Schirmanguss 4a bezeichnet wird. Um den Vorspritzling herum ist eine zweite Kunststoffschicht gespritzt, die aus einem äußeren Formteilabschnitt 7b und einem zweiten Schirmanguss 4b gebildet ist. Gemeinsam bilden die beiden Schichten das Rohrformteil 1b, von dem die beiden Schirmangüsse 4a, 4b abgetrennt und entsorgt werden, um das gewünschte Formteil 1 zu erhalten, siehe Figur 22.

Figur 12 zeigt eine schematische Darstellung einer Spritzgussmaschine umfassend eine erste äußere Werkzeughälfte 11, eine zweite äußere Werkzeughälfte 21 und eine innere Werkzeughälfte 12. Die erste äußere Werkzeughälfte 11 weist eine Einspritzeinheit 13a auf, die eine Düsennadel 22a und ein Reservoir mit einer ersten Kunststoffformasse 2a umfasst. Die zweite äußere Werkzeughälfte 21 weist ebenfalls eine Einspritzeinheit 13b auf, die eine zweite Düsennadel 22b und ein Reservoir mit einer zweiten Kunststoffformasse 2b umfasst. In der ersten äußeren Werkzeughälfte 11 ist eine im Wesentlichen zylindrische Ausnehmung 9a vorgesehen, in die die Düsennandel 22a mündet. Die die Ausnehmung 9a begrenzende Innenwand der ersten äußeren Werkzeughälfte 11 definiert die äußere Kontur der ersten Kunststoffschicht, d.h. des Vorspritzlings 1a. In der zweiten äußeren Werkzeughälfte 21 ist eine weitere im Wesentlichen zylindrische Ausnehmung 9b vorgesehen, in die die zweite Düsennandel 22b mündet. Die die zweite Ausnehmung 9b begrenzende Innenwand der zweiten äußeren Werkzeughälfte 21 definiert die äußere Kontur der zweiten Kunststoffschicht, d.h. des Rohformteils 1b. Wie zu erkennen ist, ist die zweite Ausnehmung 9b größer als die erste Ausnehmung 9a.

Die innere Werkzeughälfte 12 umfasst einen ersten Formkern 14a und einen zweiten Formkern 14b auf, die sich jeweils in Richtung der äußeren Werkzeughälften 11, 21 erheben, wobei die Formkerne 14a, 14b konzentrisch zu den Ausnehmungen 9a, 9b liegen. Die Formkerne 14a, 14b sind einstückig mit einem jeweiligen Platteneinsatz ausgebildet, der in der zweiten Werkzeughälfte einliegt. Sie besitzen ferner jeweils eine zentrale Durchgangsöffnung, durch die sich jeweils ein Auswerfer 17 hindurch erstreckt. Die beiden Formkerne 14a, 14b samt Auswerfer 17 sind identisch in Form und Größe und entsprechen dem zuvor bezüglich Figuren 1 bis 4 beschrieben Formkern 14a.

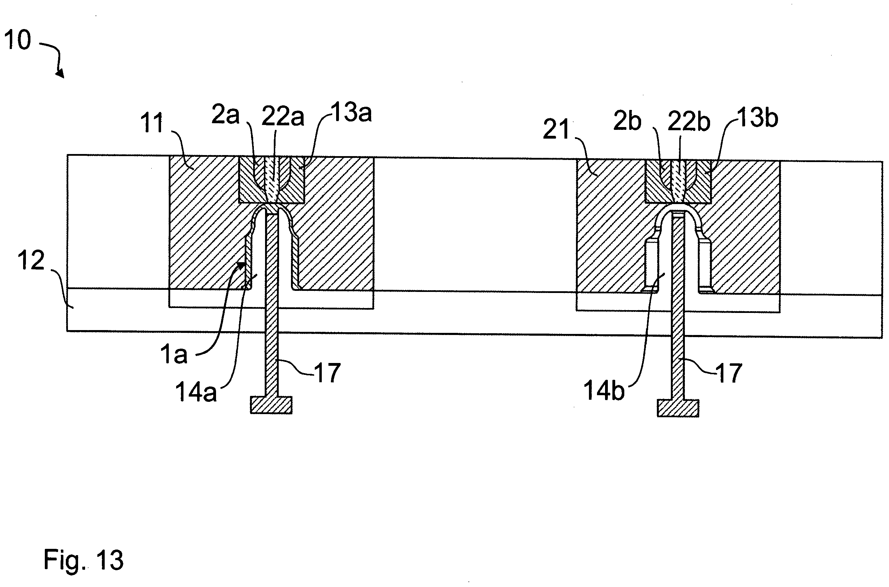

Figur 12 deutet einen ersten Verfahrensschritt an, bei welchem das innere Werkzeugteil 11 in Richtung der Pfeile A mit den äußeren beiden Werkzeughälften 11, 21 zusammenfährt, so dass die Formkerne 14a, 14b konzentrisch in den beiden Ausnehmungen 9a, 9b zum Liegen kommen. Dies ist in Figur 13 dargestellt, die die Spritzgussmaschine 10 im geschlossenen Zustand zeigt.

Zwischen dem ersten Formkern 14a und der Innenseite der ersten äußeren Werkzeughälfte 11 wird in diesem geschlossenen Zustand die erste Kavität 15a ausgebildet. Zwischen dem zweiten Formkern 14b und der zweiten äußeren Werkzeughälfte 21 liegt die zweite Kavität 15b. Bei Prozessstart sind beide Kavitäten 15a, 15b leer. In Figur 13 ist die erste Kavität 15a bereits mit Formmasse des ersten Kunststoffs 2a gefüllt ist. Durch das Ausfüllen der ersten Kavität 15a entsteht der Vorspritzling 1a. In der zweiten äußeren Werkzeughälfte 21 wird noch kein Kunststoffmaterial 2b eingespritzt, da sie zur Ausbildung der zweiten Kunststoffschicht vorgesehen ist und sich auf dem zweiten Formkern 14b noch kein Vorspritzling 1a befindet.

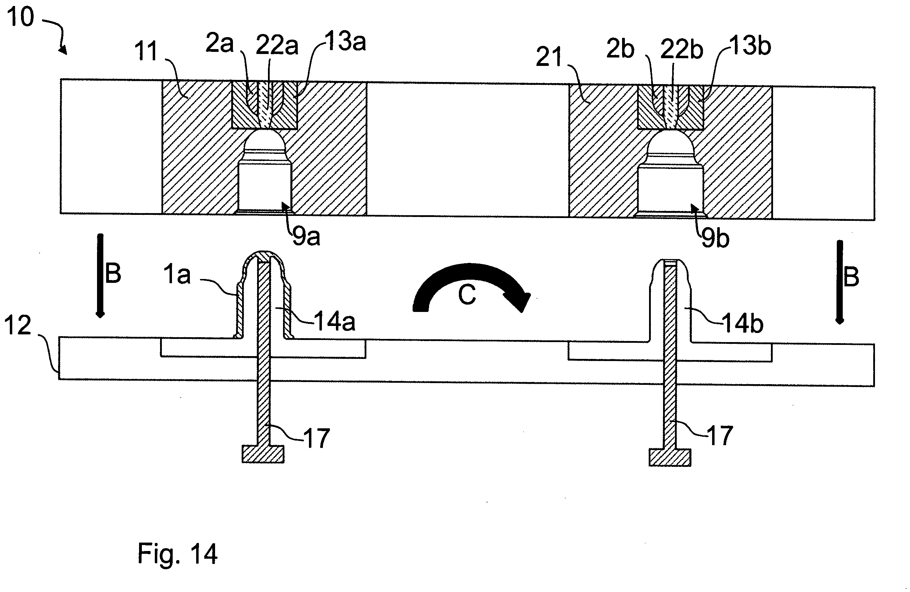

Nachdem der Vorspritzling 1a spritzgegossen ist und das erste Kunststoffmaterial 2a auf eine Erstarrungstemperatur abgekühlt ist, fahren die innere und äußeren Werkzeughälften 11, 21, 12 auseinander, wie dies die Pfeile B in Figur 14 zeigen. Das Spritzgießwerkzeug 10 öffnet sich. Der Vorspritzling 1a sitzt dabei auf dem ersten Formkern 14a auf.

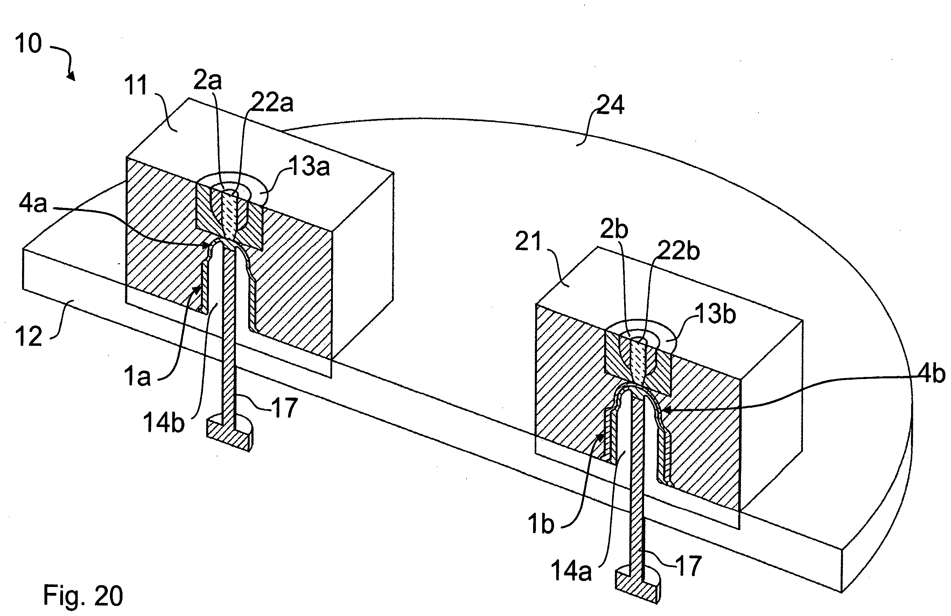

Im geöffneten Zustand der Spritzgussmaschine 10 wird der Vorspritzling 1a von der ersten äußeren Werkzeughälfte 11 zur zweiten äußeren Werkzeughälfte 21 verbracht. Dies erfolgt durch eine 180° Drehung des inneren Werkzeugteils 12, das wie in Figur 20 dargestellt, ein Drehteller 22 ist, auf dem lediglich der erste und zweite Formkern 14a, 14b gegenüberliegend angeordnet sind, wobei die Drehachse des Drehtellers 22 in der Mitte zwischen der ersten und der zweiten Einspritzeinheit 13a, 13b liegt. Die Drehbewegung des inneren Werkzeugteils 12 ist in Figur 14 durch Pfeil C angedeutet.

Durch die Drehbewegung tauschen die Formkerne 14a, 14b ihre Plätze. D.h., dass der erste Formkern 14a mitsamt Vorspritzling 1a nun vor der zweiten, größeren

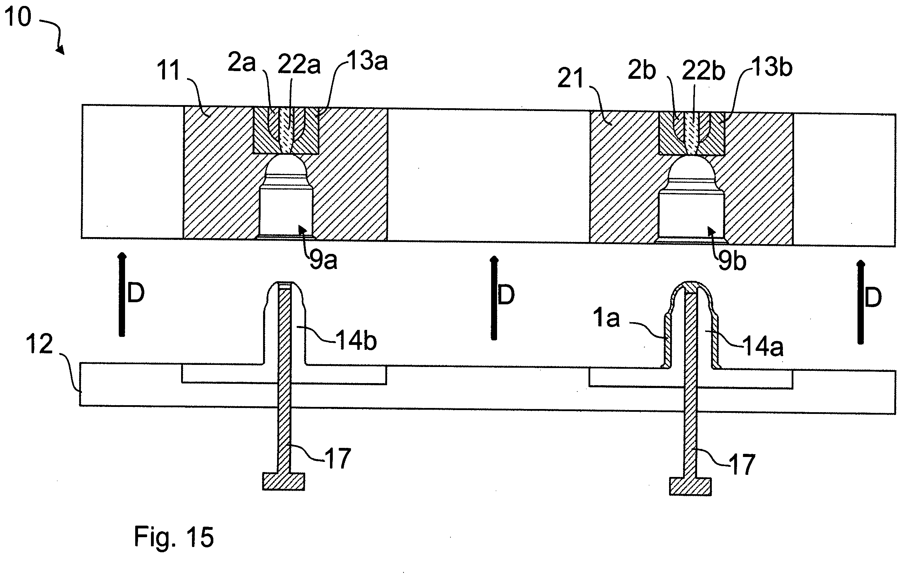

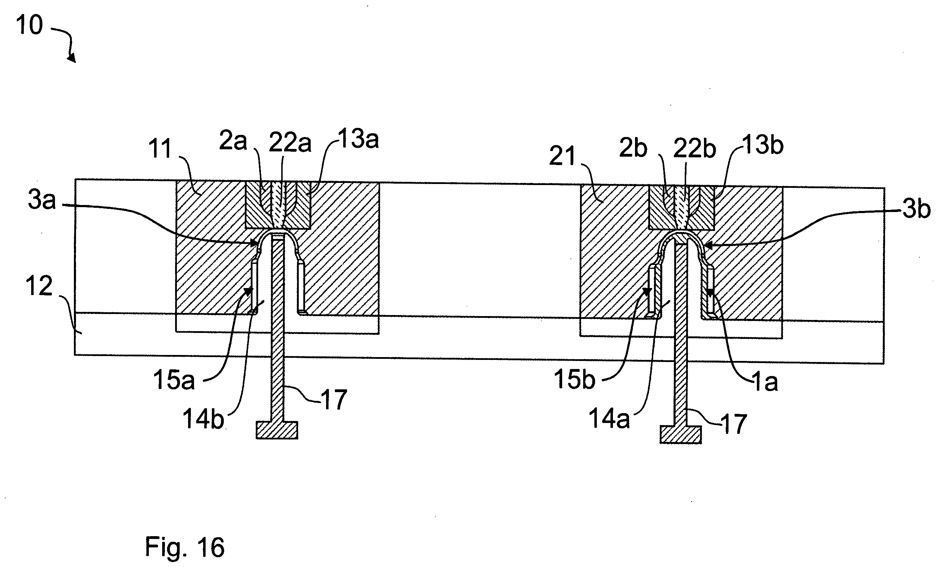

Ausnehmung 9b angeordnet ist, während der zweite Formkern 14b vor der ersten Ausnehmung 9a zu liegen kommt. Dieser Zustand ist in Figur 15 dargestellt. Anschließend schließen die Werkzeughälften wieder, indem sie entlang der Pfeile D in einander fahren. Der dann erreichte geschlossene Zustand ist in Figur 16 dargestellt.

In Figur 16 ist erkennbar, dass zwischen der zweiten äußeren Werkzeughälfte 21 und dem Vorspritzling 1a die zweite Kavität 15b sowie der zweite schirmförmige Angusskanal 3b ausgebildet ist. Der Vorspritzling 1a bildet für die Herstellung des Kunststoffformteils 1 folglich die innere Begrenzungsfläche der zweiten Formkavität 15b. Die äußere Begrenzungsfläche wird durch die zweite äußere Werkzeughälfte 21 ausgebildet. Ferner ist zwischen der ersten äußeren Werkzeughälfte 11 und dem zweiten Formkern 14b die erste Kavität 15b sowie der erste schirmförmige Angusskanal 3a ausgebildet. Hinsichtlich ihrer Form entsprechen der erste und zweite Angusskanals demjenigen Angusskanal, der zuvor bezüglich Figur 1 erläutert wurde. Die beiden Angusskanäle weisen folglich jeweils einen sphärischen Bereich 3aa, einen ersten zylindrischen Bereich 3ab, einen konischen Bereich 3ac sowie einen zweiten zylindrischen Bereich 3ad auf. Ausgehend von Figur 16 wird anschließend die erste Kavität 15a mit der ersten Kunststoffformmasse 2a gefüllt. Zeitgleich oder anschließend wird die zweite Kavität 15b mit einer zweiten Kunststoffformmasse 2b gefüllt und überströmt den zuvor hergestellten Vorspritzling 1a, d.h. die erste Kunststoffformmasse 2a, so dass ein 2-Komponenten-Formteil hergestellt wird.

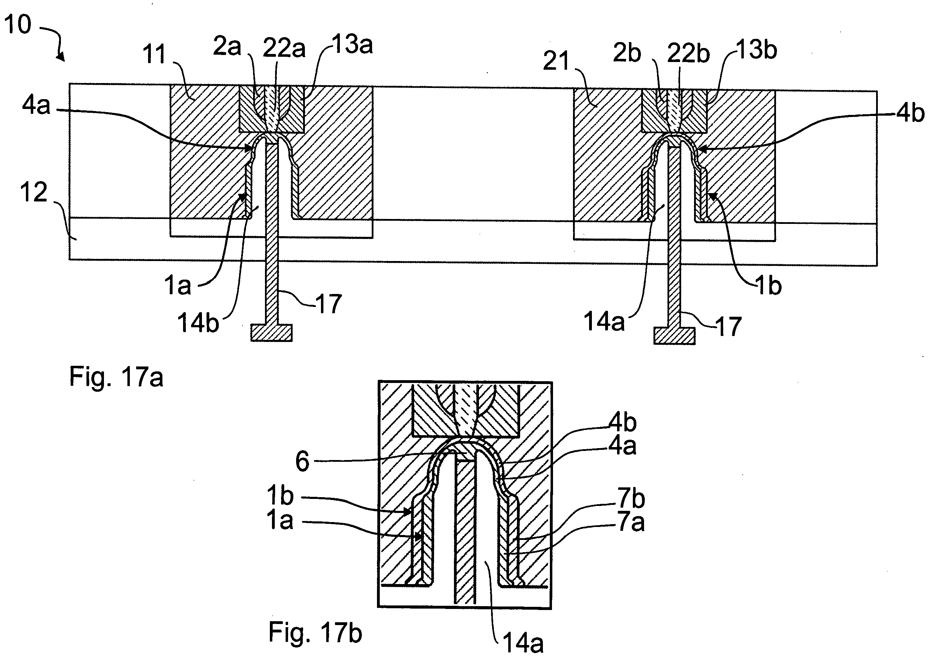

Der Zustand der Spritzgussmaschine 10 mit gefüllten Kavitäten 15a, 15b ist in Figur 17a veranschaulicht. Beide Düsennadeln 22a, 22b sind bereits verschlossen. In der ersten Formkavität 15a ist nunmehr der Vorspritzling 1a aus dem ersten Kunststoffmaterial gebildet, der neben dem inneren Formteilabschnitt 7a aus dem Schirmanguss 4a besteht. In der zweiten Formkavität 15b ist die zweite Schicht des herzustellenden Formteils aus dem zweiten Kunststoffmaterial gebildet, wobei zwischen dem ersten Formkern 14a und der zweiten äußeren Werkzeughälfte 21 das vollständig spritzgegossenen Rohformteil 1b liegt. Eine Vergrößerung desselben ist in Figur 17b gezeigt. Auf dem ersten Formkern 14a liegt der Vorspritzling 1a bestehend aus innerem Formteilabschnitt 7a und erstem Schirmanguss 4a, und auf dem Vorspritzling 1a liegt die zweite Kunststoffschicht bestehend aus innerem Formteilabschnitt 7b und zweitem Schirmanguss 4b. Beide Schichten zusammen bilden das Rohformteil 1b.

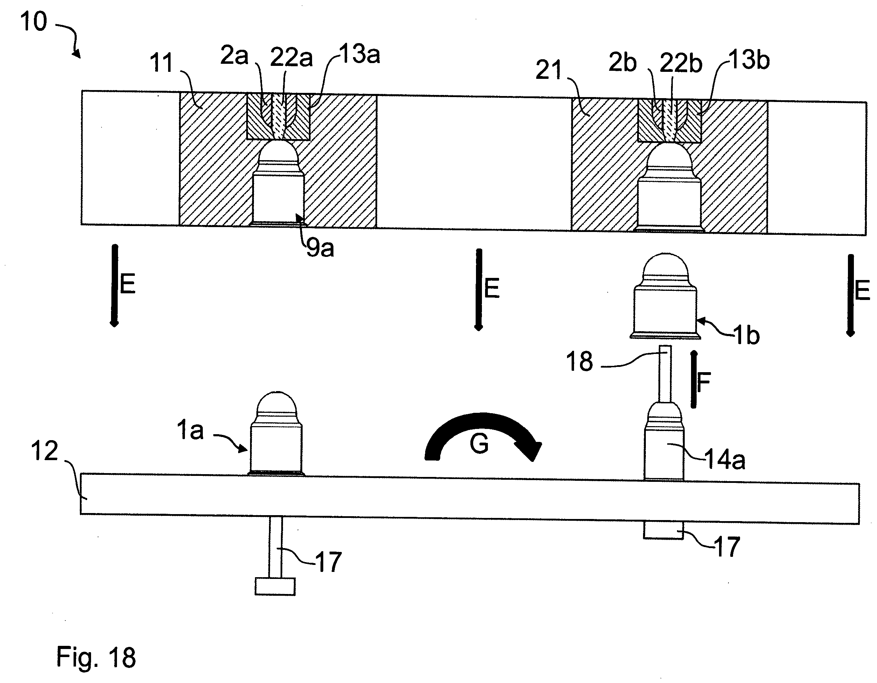

Die Werkzeughälften 11, 21, 12 fahren anschließend entlang der Pfeile E in Figur 18 auseinander. Das fertige Rohformteil 1b wird mit dem Auswerfer 17 vom ersten Formkern 14a in Richtung des Pfeils F geschoben, indem der Auswerfer 17 mit seinem dem zweiten äußeren Formteil zugewandten Ende 18 gegen den Stumpf 6 des ersten Schirmangusses 4a drückt. Der Kraftangriffspunkt liegt folglich zentral am Schirmanguss 4, sodass die auf das eigentliche Formteil 1, 7a, 7b wirkenden Entformungskräfte stark gemindert sind. Der Auswerfer 17 wird dabei gleitend in Richtung der zweiten äußeren Werkzeughälfte 21 bewegt und ist im zweiten Formkern 14b koaxial geführt. Das Rohformteil 1b wird dann entnommen oder fällt aus der Spritzgussmaschine in einen Auffangbehälter. Die innere Werkzeughälfte 12 wird dann wieder um 180° gedreht, um den zweiten Formkern 14b mitsamt neuem Vorspritzling 1b vor der zweiten äußeren Werkzeughälfte 21 zu positionieren, siehe Pfeil G. Zeitgleich, vorher oder nachher wir der Auswerfer 17 des ersten Formkerns 14a wieder in seine Ausgangslage zurückgefahren.

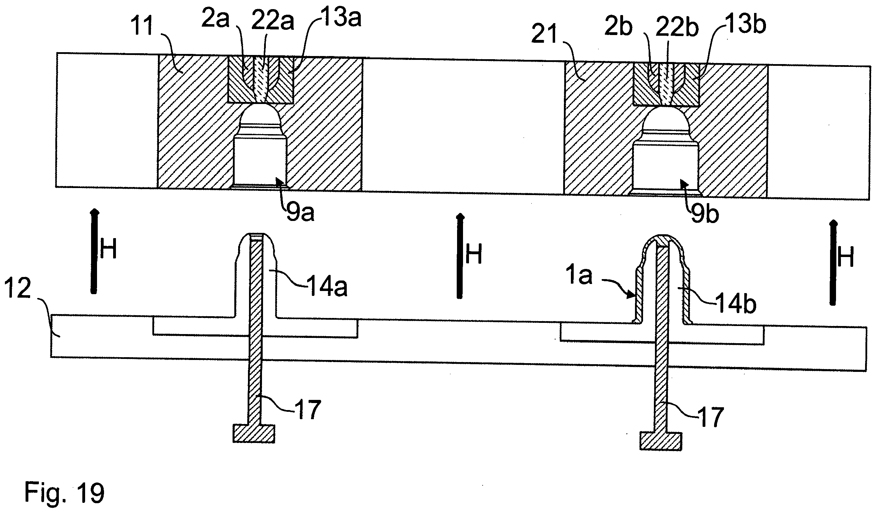

Figur 19 zeigt die Spritzgussmaschine 10 im geöffneten Zustand, wobei die Formkerne 14a, 14b die Position gewechselt haben und der hergestellte Vorspritzling 1a nun vor der zweiten äußeren Werkzeughälfte 21 positioniert ist. Hinsichtlich der Position des Vorspritzlings 1a entspricht dieser Zustand demjenigen, der in Figur 15 gezeigt ist, wobei der neue Vorspritzling 1a nun jedoch nicht auf dem ersten Formkern 14a sondern auf dem zweiten Formkern 14b sitzt. Die Werkzeughälften 11, 12, 21 fahren nach der Drehung gemäß der Pfeile H zusammen, so dass in der zweiten äußeren Werkzeughälfte 21 die zweite Kunststoffschicht auf den Vorspritzling 1a aufgetragen werden kann. Es beginnt nun ein neuer Spritzzyklus in derselben Art, wie er zuvor beschrieben wurde.

Das beschriebene Verfahren kann durch eine dritte Einspritzeinheit, die eine dritte Schicht eines weiteren Kunststoffmaterials auf die zweite Kunststoffschicht aufträgt, erweitert werden, um ein dreischichtiges Formteil zu erhalten.

Figur 20 zeigt die innere Werkzeughälfte 12 in Gestalt eines Drehtellers 24. Die Werkzeughälften 11, 12, 21 befinden sich im geschlossenen Zustand, wie er in Figur 17a gezeigt ist.

Figur 21 zeigt eine perspektivische Ansicht des zweischichtigen Rohformteils 1b. Zum Erhalt des gewünschten Formteils 1 in seiner Endform, wie es in Figur 22 gezeigt ist, werden die beiden Schirmangüsse 4a, 4b abgetrennt. Figur 23 stellt das Formteil 1 im axialen Querschnitt dar. Es besteht nur noch aus dem inneren Fomteilabschnitt 7a und dem äußeren Formteilabschnitt 7b. Der innere Fomteilabschnitt 7a dient als Gleitlager zur Lagerung der Welle einer Pumpe. Der äußere Fomteilabschnitt 7b dient dagegen als Lagerträger für das Lager und zur Befestigung des Lagers innerhalb der Pumpe oder des Pumpenmotors. Das fertige Formteil 1 ist somit eine einstückige Lagereinheit aus Kunststoff für eine Pumpe, insbesondere eine Nassläuferpumpe. Der Vorspritzling 1a und die darauf aufgespritzte zweite Schicht 7b, 4b sind daher vorzugsweise aus unterschiedlichen Kunststoffen hergestellt. So können der das Lager bildende Formteilabschnitt 7a beispielsweise aus einem Kunststoff mit guten tribologischen Eigenschaften, wie PEEK, der den Lagerträger bildende Formteilabschnitt 7b beispielsweise aus PPS bestehen.

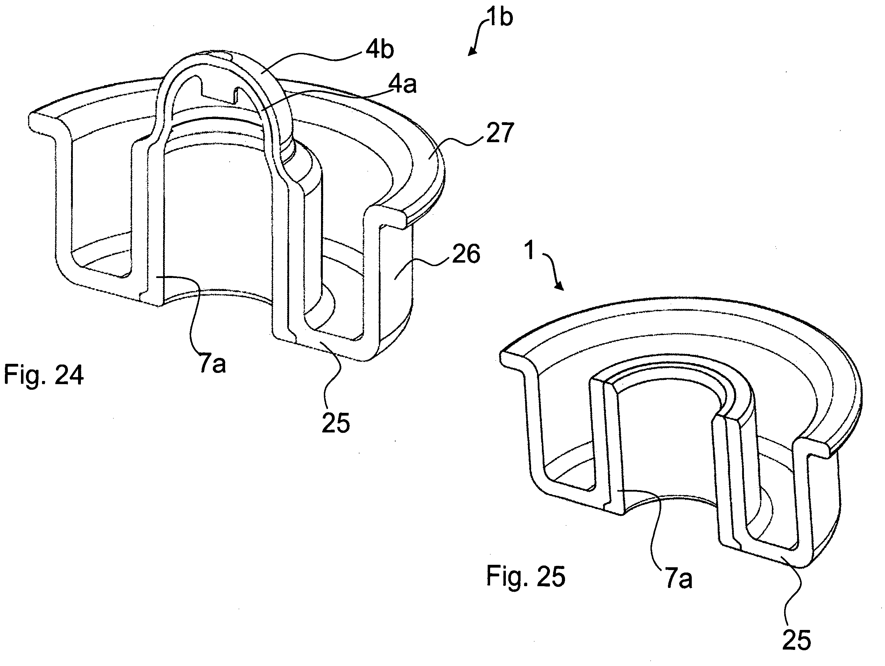

Figuren 24 und 25 zeigen eine alternative Ausführungsvariante des Formteils 1. Der Vorspritzling 1a ist hier identisch zum Vorspritzling 1a der Variante in Figuren 12 bis 23. Die äußere Kunststoffschicht 7b, 4b ist dagegen erweitert um einen Boden 25, eine koaxiale Außenwand 26 und einen Kragen 27. Der Boden 25 erstreckt sich an dem dem Schirmanguss 4b gegenüber liegenden Ende radial nach außen und verbindet den äußeren Formteilabschnitt 7b mit einem Axialende der koaxialen Außenwand 26. Zwischen dieser Außenwand 26 und dem äußeren Formteilabschnitt 7b ist ein offener Ringraum gebildet. Der Kragen 27 erstreckt sich am anderen Axialende der Außenwand 26 von dieser radial nach außen. Während Figur 24 das Rohformteil 1b zeigt, an dem noch die beiden Schirmangüsse vorhanden sind, zeigt Figur 25 das fertige Formteil 1 mit entfernten Angüssen 4a, 4b. Auch dieses Formteil bildet eine Lagereinheit für eine Welle einer Pumpe, wie zuvor beschrieben.

### Bezugszeichenliste

- 1: herzustellendes Formteil
- 1a: Vorformling
- 1b: Rohformteil
- 2a: erstes Kunststoffmaterial
- 2b: zweites Kunststoffmaterial
- 3a: erster Angusskanal
- 3aa: sphärischer Bereich des ersten Angusskanals 3
- 3ab: zylindrischer Bereich des ersten Angusskanals 3
- 3ac: konischer Bereich des Angusskanals 3
- 3ad: zylindrischer Bereich des ersten Angusskanals 3
- 3b: zweiter Angusskanal
- 4a: erster Schirmanguss
- 4aa: sphärischer Axialabschnitt des Schirmangusses 4
- 4ab: zylindrischer Axialabschnitt des Schirmangusses 4
- 4ac: konischer Axialabschnitt des Schirmangusses 4
- 4ad: zylindrischer Axialabschnitt des Schirmangusses 4
- 4b: zweiter Schirmanguss
- 5a: zentraler Anspritzpunkt des Vorformlings 1a/ Düsenanlagefläche
- 5b: zentraler Anspritzpunkt des Rohrformteils 1b/ Düsenanlagefläche
- 6: Stumpf
- 7a: innerer Formteilabschnitt
- 7b: äußerer Formteilabschnitt
- 8: Formkernachse, Formteilachse
- 9a: erste Ausnehmung
- 9b: zweite Ausnehmung
- 10: Spritzgusswerkzeug
- 11: erste äußere Werkzeughälfte
- 12: innere Werkzeughälfte
- 13a: erste Einspritzdüse
- 13b: zweite Einspritzdüse
- 14a: erster Formkern
- 14b: zweiter Formkern
- 15a: erste Formkavität
- 15b: zweite Formkavität
- 16: Ausnehmung im Formkern
- 17: Auswerfer
- 18: axiales Ende des Auswerfers
- 19: Schulter
- 20: Innenrundung
- 21: zweite äußere Werkzeughälfte
- 22a: erste Düsennadel
- 22b: zweite Düsennadel
- 23: Düsenöffnung
- 24: Drehteller
- 25: Boden
- 26: Außenwand
- 27: Kragen

## Patentansprüche

1. Vorrichtung zum Spritzgießen eines mehrschichtigen hohlen Formteils (1) aus faserverstärktem Kunststoff (2a, 2b), mit einer ersten Spritzgusseinheit, die eine erste äußere Werkzeughälfte (11) und einen ersten Formkern (14a) aufweist, welche relativ und koaxial zueinander beweglich sind, wobei in ihrem geschlossenen Zustand zwischen ihnen ein erster schirmförmiger Angusskanal (3a) und eine erste, sich daran anschließende Formkavität (15a) zur Herstellung eines Vorspritzlings (1a) gebildet ist, wobei sie eine zweite Spritzgusseinheit mit einer zweiten äußeren Werkzeughälfte (21) aufweist, zu der der erste Formkern (14a) mitsamt eines darauf befindlichen Vorspritzlings (1a) verbringbar ist, wobei der erste Formkern (14a) und die zweite äußere Werkzeughälfte (21) relativ und koaxial zueinander beweglich sind und zwischen ihnen im geschlossenen Zustand ein zweiter schirmförmiger Angusskanal (3b) und eine zweite, sich daran anschließende Formkavität (15b) zur Herstellung eines Rohformteils (1b) oder eines Zwischenspritzlings gebildet ist, wobei der zweite Angusskanal (3b) und die zweite Formkavität (15b) innenseitig durch den Vorspritzling (1a) begrenzt sind **dadurch gekennzeichnet, dass** der erste und der zweite Angusskanal (3a, 3b) jeweils einen sphärischen Bereich (3aa, 3ba) aufweisen, der von eingespritztem Kunststoffmaterial (2a, 2b) zuerst durchströmbar ist.

2. Vorrichtung nach Anspruch 1, **dadurch gekennzeichnet, dass** sie eine dritte Spritzgusseinheit mit einer dritten äußeren Werkzeughälfte aufweist, zu der der erste Formkern (14a) mitsamt eines darauf befindlichen Zwischenspritzlings verbringbar ist, wobei der erste Formkern (14a) und die dritte äußere Werkzeughälfte relativ und koaxial zueinander beweglich sind und zwischen ihnen im geschlossenen Zustand ein dritter schirmförmiger Angusskanal und eine dritte, sich daran anschließende Formkavität zur Herstellung eines Rohformteils (1b) gebildet ist, wobei der dritte Angusskanal und die dritte Formkavität innenseitig durch den Zwischenspritzling begrenzt sind.

3. Vorrichtung nach Anspruch 1 oder 2, **dadurch gekennzeichnet, dass** der erste Formkern (14a) Teil eines drehbaren Drehtellers (22) ist und durch Drehen des Drehtellers (22) von der ersten äußeren Werkzeughälfte (11) zur zweiten äußeren Werkzeughälfte (21) verbringbar ist.

4. Vorrichtung nach einem der vorherigen Ansprüche, **dadurch gekennzeichnet, dass** der erste Formkern (14a) Teil eines beweglichen Schlittens ist und durch Bewegen des Schlittens entlang einer Strecke von der ersten äußeren Werkzeughälfte (11) zur zweiten äußeren Werkzeughälfte (21) verbringbar ist.

5. Vorrichtung nach Anspruch 3 oder 4, **dadurch gekennzeichnet, dass** der Drehteller (22) oder der Schlitten einen zweiten Formkern (14b) aufweist, der gemeinsam mit dem ersten Formkern (14a) bewegbar ist, und der mit der ersten äußeren Werkzeughälfte (11) koaxial zusammenfahrbar ist, wenn der erste Formkern (14a) mit der zweiten äußeren Werkzeughälfte (21) zusammengefahren wird.

6. Vorrichtung nach Anspruch 5, **dadurch gekennzeichnet, dass** sie dazu eingerichtet ist, auf den zweiten Formkern (14b) ein erstes Kunststoffmaterial (2a) und zeitgleich auf den den Vorspritzling (1a) tragenden ersten Formkern (14a) ein zweites Kunststoffmaterial zu spritzen.

7. Vorrichtung nach einem der vorherigen Ansprüche, **dadurch gekennzeichnet, dass** sich an den sphärischen Bereich (3aa) ein konischer Bereich (3ac) anschließt, der vorzugsweise in die erste Kavität (15a) mündet.

8. Vorrichtung einem der vorherigen Ansprüche , **dadurch gekennzeichnet, dass** sich an den sphärischen Bereich (3aa) ein zylindrischer Bereich (3ab) anschließt, der vorzugsweise in die erste Kavität (15a) mündet.

9. Vorrichtung nach Anspruch 8, **dadurch gekennzeichnet, dass** sich an den zylindrischen Bereich (3ab) ein konischer Bereich (3ac) anschließt, der vorzugsweise in die erste Kavität (15a) mündet.

10. Vorrichtung nach Anspruch 9, **dadurch gekennzeichnet, dass** sich an den konischen Bereich (3ac) ein weiterer zylindrischer Bereich (3ad) anschließt, der mit gleicher Wandstärke wie die erste Formkavität (15a) in diese mündet.

11. Vorrichtung nach Anspruch 10, **dadurch gekennzeichnet, dass** der weitere zylindrische Bereich (3ad) außen eine abgerundete Schulter (19) aufweist und der Übergang vom konischen Bereich (3ac) zu dem zylindrischen Bereich (3ad) eine Innenrundung (20) aufweist, deren Radius gleich oder größer dem Radius der Schulter (19) ist.

12. Vorrichtung nach einem der Ansprüche 8 bis 11, **dadurch gekennzeichnet, dass** sich der sphärische Bereich, der zylindrische Bereich (3ab), der konische Bereich (3ac) oder weitere zylindrische Bereich (3ad) im Querschnitt betrachtet trichterförmig aufweitet, um mit gleicher Wandstärke wie die erste Formkavität (15a) in diese zu münden.

13. Vorrichtung nach einem der vorherigen Ansprüche, **dadurch gekennzeichnet, dass** der zweite Angusskanal (3b) bezüglich seiner Form identisch zum ersten Angusskanal (3a) nach einem der Ansprüche 7 bis 12 ausgebildet ist.

14. Vorrichtung nach einem der Ansprüche 1 bis 13, **dadurch gekennzeichnet, dass** ein Auswerfer (17) zum Auswerfen des hergestellten Rohformteils (1) koaxial im ersten Formkern (14a) geführt ist und den ersten Angusskanal (3a) mit begrenzt.

15. Vorrichtung nach einem der Ansprüche 1 bis 14, **dadurch gekennzeichnet, dass** die erste Spritzgusseinheit eine erste Einspritzdüse (13a) zum zentralen Einspritzen eines ersten Kunststoffmaterials (2a) in den ersten Angusskanal (3a) aufweist.

16. Vorrichtung nach einem der Ansprüche 1 bis 15, **dadurch gekennzeichnet, dass** die zweite Spritzgusseinheit eine zweite Einspritzdüse (13a) zum zentralen Einspritzen eines zweiten Kunststoffmaterials (2b) in den zweiten Angusskanal (3b) aufweist.

17. Verfahren zur Herstellung eines mehrschichtigen hohlen Formteils (1) aus faserverstärktem Kunststoff (2a, 2b), bei dem in einem ersten Schritt ein Kunststoffmaterial (2a) über einen ersten schirmförmigen Angusskanal (3a) unter Ausbildung eines ersten Schirmangusses (4a) in eine erste Formkavität (15a) eingespritzt wird, wobei der erste Angusskanal (3a) einen sphärischen Bereich (3aa) aufweist, der von eingespritztem Kunststoffmaterial (2a) zuerst durchströmt wird, und dass in einem zweiten Schritt ein Kunststoffmaterial (2b) über einen zweiten schirmförmigen Angusskanal (3b) mit einem sphärischen Bereich (3ba), der von dem eingespritzten Kunststoffmaterial (2b) zuerst durchströmt wird, unter Ausbildung eines zweiten Schirmangusses (4b) in eine zweite Formkavität (15b) eingespritzt wird, wobei der zweite Angusskanal (3b) durch den ersten Schirmanguss (4a) begrenzt wird und die zweite Formkavität (15b) durch das die erste Formkavität (15a) ausfüllende Kunststoffmaterial (2a) begrenzt wird und die Schirmangüsse (4a, 4b) anschließend zum Erhalt des Formteils (1) abgetrennt werden, wobei zur Ausbildung der ersten Formkavität (15a) eine äußere Werkzeughälfte (11) und eine einen Formkern (14a) umfassende innere Werkzeughälfte (12) einer Spritzgießvorrichtung relativ zueinander zusammengefahren werden, in die erste Formkavität (15a) zur Herstellung eines Vorspritzlings (1a) Kunststoffmaterial (2a) eingespritzt wird und die äußere Werkzeughälfte (11) und der Formkern (14a) anschließend relativ zueinander auseinander gefahren werden, danach der Formkern (14a) mitsamt dem Vorspritzling (1a) zu einer zweiten äußeren, eine zweite Einspritzdüse (13b) zum Einspritzen des Kunststoffmaterials (2a) im zweiten Schritt aufweisenden Werkzeughälfte (21) der Spritzgießvorrichtung verbracht wird und diese zur Ausbildung der zweiten Kavität (15b) relativ zueinander zusammengefahren werden, in die zweite Formkavität (15b) zur Herstellung eines Zwischenspritzlings oder Rohformteils (1b) Kunststoffmaterial (2b) eingespritzt wird und die äußere Werkzeughälfte (21) und der Formkern (14a) anschließend relativ zueinander auseinandergefahren werden.

## Claims

1. Device for injection-moulding a multi-layered hollow article (1) from fibre-reinforced plastic (2a, 2b), with a first injection-moulding unit, which has a first outer mould half (11) and a first mould core (14a), which are movable relatively and coaxially with respect to one another, wherein a first fan-shaped runner (3a) and a first mould cavity (15a) adjoining thereto for producing a preform (1a) are formed between them in their closed state, wherein it has a second injection-moulding unit with a second outer mould half (21), to which the first mould core (14a) together with a preform (1a) located on it can be brought, wherein the first mould core (14a) and the second outer mould half (21) are movable relatively and coaxially with respect to one another and a second fan-shaped runner (3b) and a second mould cavity (15b) adjoining thereto for producing a blank (1b) or an interim moulding are formed between them in the closed state, wherein the second runner (3b) and the second mould cavity (15b) are bounded on the inside by the preform (1a), **characterized in that** the first and second runners (3a, 3b) each have a spherical region (3aa, 3ba), which can be flowed through first by injected plastics material (2a, 2b).

2. Device according to Claim 1, **characterized in that** it has a third injection-moulding unit with a third outer mould half, to which the first mould core (14a) together with an interim moulding located on it can be brought, wherein the first mould core (14a) and the third outer mould half are movable relatively and coaxially with respect to one another and a third fan-shaped runner and a third mould cavity adjoining thereto for producing a blank (1b) are formed between them in the closed state, wherein the third runner and the third mould cavity are bounded on the inside by the interim moulding.

3. Device according to Claim 1 or 2, **characterized in that** the first mould core (14a) is part of a rotatable turntable (22) and can be brought from the first outer mould half (11) to the second outer mould half (21) by turning of the turntable (22).

4. Device according to one of the preceding claims, **characterized in that** the first mould core (14a) is part of a movable carriage and can be brought from the first outer mould half (11) to the second outer mould half (21) by moving the carriage along a path.

5. Device according to Claim 3 or 4, **characterized in that** the turntable (22) or the carriage has a second mould core (14b), which is movable along with the first mould core (14a), and which can be moved together coaxially with the first outer mould half (11) when the first mould core (14a) is moved together with the second outer mould half (21).

6. Device according to Claim 5, **characterized in that** it is designed to inject a first plastics material (2a) onto the second mould core (14b) and at the same time to inject a second plastics material onto the first mould core (14a), carrying the preform (1a).

7. Device according to one of the preceding claims, **characterized in that** the spherical region (3aa) is adjoined by a conical region (3ac), which preferably opens out into the first cavity (15a).

8. Device according to one of the preceding claims, **characterized in that** the spherical region (3aa) is adjoined by a cylindrical region (3ab), which preferably opens out into the first cavity (15a).

9. Device according to Claim 8, **characterized in that** the cylindrical region (3ab) is adjoined by a conical region (3ac), which preferably opens out into the first cavity (15a).

10. Device according to Claim 9, **characterized in that** the conical region (3ac) is adjoined by a further cylindrical region (3ad), which opens out into the first mould cavity (15a) with the same wall thickness as the latter.

11. Device according to Claim 10, **characterized in that** the further cylindrical region (3ad) has on the outside a rounded shoulder (19) and the transition from the conical region (3ac) to the cylindrical region (3ad) has an inner rounding (20), the radius of which is equal to or greater than the radius of the shoulder (19).

12. Device according to one of Claims 8 to 11, **characterized in that** the spherical region, the cylindrical region (3ab), the conical region (3ac) or further cylindrical region (3ad) widens in the form of a funnel when viewed in cross section, in order to open out into the mould cavity (15a) with the same wall thickness as the latter.

13. Device according to one of the preceding claims, **characterized in that** the second runner (3b) is formed with respect to its shape identically to the first runner (3a) according to one of Claims 7 to 12.

14. Device according to one of Claims 1 to 13, **characterized in that** an ejector (17) for ejecting the blank (1) produced is guided coaxially in the first mould core (14a) and plays a part in bounding the first runner (3a).

15. Device according to one of Claims 1 to 14, **characterized in that** the first injection-moulding unit has a first injection nozzle (13a) for the central injection of a first plastics material (2a) into the first runner (3a).

16. Device according to one of Claims 1 to 15, **characterized in that** the second injection-moulding unit has a second injection nozzle (13a) for the central injection of a second plastics material (2b) into the second runner (3b).

17. Method for producing a multi-layered hollow article (1) from fibre-reinforced plastic (2a, 2b), in which, in a first step, a plastics material (2a) is injected into a first mould cavity (15a) by way of a first fan-shaped runner (3a) to form a first fan gate (4a), wherein the first runner (3a) has a spherical region (3aa), which is flowed through first by injected plastics material (2a), and that, in a second step, a plastics material (2b) is injected into a second mould cavity (15b) by way of a second fan-shaped runner (3b) with a spherical region (3ba), which is flowed through first by the injected plastics material (2b), to form a second fan gate (4b), wherein the second runner (3b) is bounded by the first fan gate (4a) and the second mould cavity (15b) is bounded by the plastics material (2a) filling the first mould cavity (15a) and the fan gates (4a, 4b) are subsequently cut off to obtain the article (1), wherein, to form the first mould cavity (15a), an outer mould half (11) and an inner mould half (12), comprising a mould core (14a), of an injection-moulding device are moved together relatively with respect to one another, plastics material (2a) is injected into the first mould cavity (15a) to produce a preform (1a) and the outer mould half (11) and the mould core (14a) are subsequently moved apart relatively with respect to one another, after which the mould core (14a) together with the preform (1a) is brought to a second outer mould half (21), having a second injection nozzle (13b) for injecting the plastics material (2a) in the second step, of the injection-moulding device and these are brought together relatively with respect to one another to form the second cavity (15b), plastics material (2b) is injected into the second mould cavity (15b) to produce an interim moulding or blank (1b) and the outer mould half (21) and the mould core (14a) are subsequently moved apart relatively with respect to one another.

## Revendications

1. Dispositif pour le moulage par injection d'une pièce moulée creuse multicouche (1) en matière plastique renforcée par des fibres (2a, 2b), avec une première unité de moulage par injection, qui présente une première moitié d'outil extérieure (11) et un premier noyau de moulage (14a), qui sont mobiles l'un par rapport à l'autre et coaxiaux l'un à l'autre, dans lequel dans leur état fermé un premier canal d'entrée en forme de blindage (3a) et une première cavité de moulage (15a) s'y raccordant destinée à la fabrication d'une ébauche de moulage (1a) sont formés entre eux, dans lequel il présente une deuxième unité de moulage avec une deuxième moitié d'outil extérieure (21), à laquelle le premier noyau de moulage (14a) avec l'ébauche de moulage (1a) qu'il porte peut être amené, dans lequel le premier noyau de moulage (14a) et la deuxième moitié d'outil (21) sont mobiles l'un par rapport à l'autre et sont coaxiaux l'un à l'autre et à l'état fermé un deuxième canal d'entrée en forme de blindage (3b) et une deuxième cavité de moulage (15b) s'y raccordant destinée à la fabrication d'une pièce moulée tubulaire (1b) ou d'une ébauche intermédiaire sont formés entre eux, dans lequel le deuxième canal d'entrée (3b) et la deuxième cavité de moulage (15b) sont limités intérieurement par l'ébauche de moulage (1a), **caractérisé en ce que** le premier et le deuxième canaux d'entrée (3a, 3b) présentent chacun une région sphérique (3aa, 3ba), qui peut être parcourue d'abord par une matière plastique (2a, 2b) injectée.

2. Dispositif selon la revendication 1, **caractérisé en ce qu'**il présente une troisième unité de moulage par injection avec une troisième moitié d'outil extérieure, à laquelle le premier noyau de moulage (14a) avec une ébauche de moulage intermédiaire qu'il porte peut être amené, dans lequel le premier noyau de moulage (14a) et la troisième moitié d'outil extérieure sont mobiles l'un par rapport à l'autre et sont coaxiaux l'un à l'autre et à l'état fermé un troisième canal d'entrée en forme de blindage et une troisième cavité de moulage s'y raccordant destinée à la fabrication d'une pièce moulée tubulaire (1b) sont formés entre eux, dans lequel le troisième canal d'entrée et la troisième cavité de moulage sont limités intérieurement par l'ébauche intermédiaire.

3. Dispositif selon la revendication 1 ou 2, **caractérisé en ce que** le premier noyau de moulage (14a) fait partie d'un plateau tournant rotatif (22) et peut être amené de la première moitié d'outil extérieure (11) à la deuxième moitié d'outil extérieure (21) par rotation du plateau tournant (22).

4. Dispositif selon l'une quelconque des revendications précédentes, **caractérisé en ce que** le premier noyau de moulage (14a) fait partie d'un chariot mobile et peut être amené de la première moitié d'outil extérieure (11) à la deuxième moitié d'outil extérieure (21) par déplacement du chariot le long d'un trajet.

5. Dispositif selon la revendication 3 ou 4, **caractérisé en ce que** le plateau tournant (22) ou le chariot présente un deuxième noyau de moulage (14b), qui est déplaçable de concert avec le premier noyau de moulage (14a), et qui peut être réuni de façon coaxiale à la première moitié d'outil extérieure (11), lorsque le premier noyau de moulage (14a) est réuni à la deuxième moitié d'outil extérieure (21).

6. Dispositif selon la revendication 5, **caractérisé en ce qu'**il est conçu pour injecter une première matière plastique (2a) sur le deuxième noyau de moulage (14b) et simultanément une deuxième matière plastique sur le premier noyau de moulage (14a) portant l'ébauche de moulage (1a).

7. Dispositif selon l'une quelconque des revendications précédentes, **caractérisé en ce qu'**à la région sphérique (3aa) se raccorde une région conique (3ac), qui débouche de préférence dans la première cavité (15a).

8. Dispositif selon l'une quelconque des revendications précédentes, **caractérisé en ce qu'**à la région sphérique (3aa) se raccorde une région cylindrique (3ab), qui débouche de préférence dans la première cavité (15a).

9. Dispositif selon la revendication 8, **caractérisé en ce qu'**à la région cylindrique (3ab) se raccorde une région conique (3ac), qui débouche de préférence dans la première cavité (15a).

10. Dispositif selon la revendication 9, **caractérisé en ce qu'**à la région conique (3ac) se raccorde une autre région cylindrique (3ad), qui débouche dans la première cavité de moulage (15a) avec la même épaisseur de paroi que celle-ci.

11. Dispositif selon la revendication 10, **caractérisé en ce que** l'autre région cylindrique (3ad) présente extérieurement un épaulement arrondi (19) et la transition de la région conique (3ac) à la région cylindrique (3ad) présente un arrondi intérieur (20), dont le rayon est égal ou supérieur au rayon de l'épaulement (19).

12. Dispositif selon l'une quelconque des revendications 8 à 11, **caractérisé en ce que** la région sphérique, la région cylindrique (3ab), la région conique (3ac) ou l'autre région cylindrique (3ad), considérée en section transversale, s'évase en forme d'entonnoir, afin de déboucher dans la première cavité de moulage (15a) avec la même épaisseur de paroi que celle-ci.

13. Dispositif selon l'une quelconque des revendications précédentes, **caractérisé en ce que** le deuxième canal d'entrée (3b) est, en ce qui concerne sa forme, identique au premier canal d'entrée (3a) selon l'une quelconque des revendications 7 à 12.

14. Dispositif selon l'une quelconque des revendications 1 à 13, **caractérisé en ce qu'**un éjecteur (17) destiné à éjecter la pièce moulée tubulaire fabriquée (1) est guidé de façon coaxiale dans le premier noyau de moulage (14a) et limite ainsi le premier canal d'entrée (3a).

15. Dispositif selon l'une quelconque des revendications 1 à 14, **caractérisé en ce que** la première unité de moulage par injection présente une première buse d'injection (13a) pour l'injection centrale d'une première matière plastique (2a) dans le premier canal d'entrée (3a).

16. Dispositif selon l'une quelconque des revendications 1 à 15, **caractérisé en ce que** la deuxième unité de moulage par injection présente une deuxième buse d'injection (13a) pour l'injection centrale d'une deuxième matière plastique (2b) dans le deuxième canal d'entrée (3b).

17. Procédé de fabrication d'une pièce moulée creuse multicouche (1) en matière plastique renforcée par des fibres (2a, 2b), dans lequel dans une première étape on injecte une matière plastique (2a) dans une première cavité de moulage (15a) par un premier canal d'entrée en forme de blindage (3a) avec formation d'une première carotte en forme de blindage (4a), dans lequel le premier canal d'entrée (3a) présente une région sphérique (3aa), qui est d'abord parcourue par la matière plastique (2a) injectée, et en ce que dans une deuxième étape on injecte une matière plastique (2b) dans une deuxième cavité de moulage (15b) par un deuxième canal d'entrée en forme de blindage (3b) avec une région sphérique (3ba), qui est parcourue d'abord par la matière plastique injectée (2b), avec formation d'une deuxième carotte en forme de blindage (4b), dans lequel le deuxième canal d'entrée (3b) est limité par la première carotte en forme de blindage (4a) et la deuxième cavité de moulage (15b) est limitée par la matière plastique (2a) remplissant la première cavité de moulage (15a) et on coupe ensuite les carottes en forme de blindage (4a, 4b) pour obtenir la pièce moulée (1), dans lequel pour former la première cavité de moulage (15a) on rapproche l'une de l'autre une moitié d'outil extérieure (11) et une moitié d'outil intérieure (12) comprenant un noyau de moulage (14a) d'un dispositif de moulage par injection, on injecte dans la première cavité de moulage (15a) une matière plastique (2a) pour la fabrication d'une ébauche de moulage (1a) et on écarte ensuite l'une de l'autre la première moitié d'outil extérieure (11) et le noyau de moulage (14a), puis on amène le noyau de moulage (14a) de concert avec l'ébauche de moulage (1a) à une deuxième moitié d'outil extérieure (21) du dispositif de moulage par injection présentant une deuxième buse d'injection (13b) pour injecter la matière plastique (2a) dans la deuxième étape et ceux-ci sont rapprochés l'un de l'autre pour la formation de la deuxième cavité (15b), on injecte une matière plastique (2b) dans la deuxième cavité de moulage (15b) pour la fabrication d'une ébauche intermédiaire ou de la pièce moulée tubulaire (1b) et on écarte ensuite l'un de l'autre la moitié d'outil extérieure (21) et le noyau de moulage (14a).
